# EUROPÄISCHE PATENTSCHRIFT

(11) **EP 3 866 657 B1**
(45) Veröffentlichungstag und Bekanntmachung des Hinweises auf die Patenterteilung: **01.06.2022**
(21) Anmeldenummer: 19719410.3
(22) Anmeldetag: 15.04.2019
(51) Int. Cl.: A47L 5/38, A47L 7/00, A47L 9/08, A47L 9/24, B60S 3/00

(54) **VERWENDUNG EINES SAUGREINIGUNGSVORSATZES EINER REINIGUNGSVORRICHTUNG ZUR INNENREINIGUNG VON KRAFTFAHRZEUGEN**
USE OF A SUCTION-CLEANING ATTACHMENT OF A CLEANING DEVICE FOR CLEANING THE INTERIOR OF MOTOR VEHICLES
UTILISATION D'UN ADAPTATEUR DE NETTOYAGE PAR ASPIRATION D'UN DISPOSITIF DE NETTOYAGE POUR LE NETTOYAGE INTÉRIEUR DE VÉHICULES AUTOMOBILES

(43) Veröffentlichungstag der Anmeldung: 25.08.2021
(73) Patentinhaber: Mr. Wash Autoservice AG, 45143 Essen (DE)
(72) Erfinder: ENNING, Richard, 45470 Mülheim (DE); VAN DE POL, Cornelis, 58119 Haagen (DE)
(74) Vertreter: Von Rohr Patentanwälte Partnerschaft mbB
(86) Internationale Anmeldenummer: PCT/EP2019/059699
(87) Internationale Veröffentlichungsnummer: WO 2020/211925

(56) Entgegenhaltungen:
- FR-A1- 2 867 052
- KR-U- 20140 003 023
- US-A- 3 525 118
- US-A1- 2017 325 644

## Beschreibung

Die Erfindung betrifft die Verwendung eines Saugreinigungsvorsatzes einer Reinigungsvorrichtung zur Innenreinigung von Kraftfahrzeugen mittels einer Saugluftströmung, mit einem einen Saugkanal zum Führen der Saugluftströmung aufweisenden Gehäuse.

Reinigungsvorrichtungen der vorgenannten Art werden auch als Autostaubsauger bezeichnet, die üblicherweise im gewerblichen Bereich eingesetzt werden, wobei mittels des Saugreinigungsvorsatzes bzw. der Staubsaugdüse Schmutz und/oder Partikel aus dem Innenraum des Fahrzeugs gesaugt werden. Die Reinigungsvorrichtung ist in der Regel derart ausgebildet, dass Schmutz und/oder Partikel von einem Untergrund, beispielsweise den Sitzen und/oder den Bodenmatten, aufsaugbar sind.

Allerdings ergeben sich in der Praxis Probleme bei der Innenreinigung von Kraftfahrzeugen. Im Fahrzeuginnenraum sind viele Bereiche gar nicht oder nur schwer bei der Reinigung zugänglich, so dass diese Bereiche auch nicht oder nicht hinreichend gereinigt werden können. Dies betrifft beispielsweise den Bereich zwischen den Autositzen, aber auch Bereiche, die verwinkelt oder schlecht zugänglich sind. Demgemäß ist keine effiziente Absaugung von Schmutzpartikeln in den vorgenannten Bereichen möglich.

Im Stand der Technik ist zur Verbesserung der Innenreinigung von Kraftfahrzeugen vorgesehen, dass im Gehäuse zusätzlich zum Saugkanal ein Druckluftkanal zum Führen einer Druckluftströmung vorgesehen ist und/oder dass dem Gehäuse zusätzlich zum Saugkanal ein Druckluftkanal zum Führen einer Druckluftströmung zugeordnet ist.

Dass der Druckluftkanal dem Gehäuse zugeordnet ist, ist insbesondere derart zu verstehen, dass der Druckluftkanal zwar nicht im Gehäuse des Saugreinigungsvorsatzes verläuft, sondern beispielsweise außenseitig am Gehäuse vorgesehen ist, dann jedoch vorzugsweise fest mit dem Gehäuse verbunden ist. Der Austritt der Druckluft aus dem Druckluftkanal ist insbesondere strahlförmig, so dass der Druckluftstrahl bzw. die Druckluftströmung ziel- und zweckgerichtet auf einen zu reinigenden, insbesondere schwer zugänglichen, Bereich gerichtet werden kann. Die Druckluftströmung kann bedarfsweise während des Saugbetriebes zugeschaltet und dann gleichzeitig mit der Saugluftströmung zur Innenreinigung von Kraftfahrzeugen eingesetzt werden.

Im Stand der Technik ist daher ist eine Kombination einer Druckluftströmung und einer Saugluftströmung, die beide bevorzugt im vorderen Bereich aus dem erfindungsgemäßen Saugreinigungsvorsatz austreten, bekannt. Die Druckluftströmung ist dabei zum Aufwirbeln von Partikeln und/oder Schmutz, insbesondere Staubpartikeln, an schwer zugänglichen Bereichen vorgesehen. So kann die Druckluft gezielt auf schwer zugängliche Bereiche gerichtet werden und in diesen Bereichen die Schmutzpartikel aufwirbeln, welche anschließend durch die Saugluftströmung absaugbar sind. Die Schmutzpartikel können mittels Druckluft aus schwer zugänglichen Bereichen, insbesondere Spalten, Vertiefungen und/oder Schlitzen, in offene und/oder für die Saugluftströmung und/oder den Saugreinigungsvorsatz zugängliche Bereiche transportiert werden, wobei die Schmutzpartikel in diesen Bereichen absaugbar sind. Hierdurch erhöht sich die Reinigungseffizienz der Reinigungsvorrichtung im Vergleich zum "reinen" Saugbetrieb signifikant, da eine Reinigung nicht nur an leicht zugänglichen Bereichen im Fahrzeuginnenraum, sondern auch in Bereichen, die mit der Mündung des Saugreinigungsvorsatzes nicht unmittelbar zu erreichen sind, gewährleistet werden kann.

Der Druckluftkanal kann unabhängig von dem Saugkanal ausgebildet sein. Beide Kanäle verlaufen letztlich getrennt voneinander, da der Saugbetrieb und der Druckluftbetrieb gleichzeitig erfolgen können. Der Saugbetrieb und der Druckluftbetrieb sind damit voneinander entkoppelt. Allerdings können die jeweiligen Austrittsöffnungen aus den jeweiligen Kanälen für die Druckluftströmung und die Saugluftströmung zumindest im Wesentlichen in einer gemeinsamen Ebene vorgesehen sein. Insbesondere treten die Saugluft und die Druckluft an der vorderseitigen Mündung des Saugreinigungsvorsatzes aus.

Vorteilhaft an dem vorgenannten Saugreinigungsvorsatz ist, dass dieser an bereits bestehenden Reinigungsvorrichtungen, insbesondere Autostaubsauger, anschließbar ist.

Nachteilig an dem vorgenannten aus dem Stand der Technik bekannten Saugreinigungsvorsatz ist, dass dieser vergleichsweise unhandlich und letztlich schwer zu bedienen ist. Ein Zuschalten der Druckluftströmung ist dergestalt durchzuführen, dass ein Umgreifen des Saugreinigungsvorsatzes erfolgen muss. Zum Einschalten des Druckluftbetriebes sind beim Stand der Technik Betätigungseinrichtungen vorgesehen, die eine weitere Hand und/oder eine weitere Bedienperson benötigen. Die Betätigung muss beidhändig erfolgen.

Bei dem bekannten Saugreinigungsvorsatz ist außenseitig am Gehäuse ein Griffbereich zum Greifen des Saugreinigungsvorsatzes mit einer Hand vorgesehen. Während des Saugbetriebes wird der Saugreinigungsvorsatz zumindest bereichsweise am Griffbereich durch die Hand eines Benutzers umgriffen, so dass der Saugreinigungsvorsatz gehalten und geführt werden kann. Letztlich ist es allerdings so, dass zum Zuschalten des Druckluftbetriebes die weitere Hand genutzt und/oder der Saugbetrieb bzw. das Absaugen unterbrochen werden muss.

Demzufolge ist die Aktivierung des Druckluftbetriebes beim Stand der Technik nur mit einem vergleichsweise hohen Aufwand durchführbar, was letztlich auch die benötigte Zeit zur Innenreinigung von Kraftfahrzeugen erhöht und zudem dazu führen kann, dass die zuvor beschriebene vorteilhafte Druckluftströmung nur selten zur Innenreinigung von Kraftfahrzeugen genutzt wird, worunter das Reinigungsergebnis leidet.

Die FR 2 867 052 A1 betrifft eine Vorrichtung, die eine Saugdüse umfasst. Die Saugdüse besteht aus einem rohrförmigen Griff, der durch eine flexible Leitung zu einer Vakuumquelle verbunden ist.

Die KR 2014 0003023 U betrifft eine Reinigungsvorrichtung, die zum Saugen verwendet werden kann.

Die US 3,525,118 A betrifft einen Reinigungsvorsatz, der durch die Hand eines Benutzers betätigt werden kann.

Aufgabe der vorliegenden Erfindung ist es nun, die vorgenannten Nachteile des Standes der Technik zu vermeiden oder aber zumindest im Wesentlichen zu reduzieren. Insbesondere ist es die Aufgabe der vorliegenden Erfindung, einen Saugreinigungsvorsatz bereitzustellen, mit dem in kurzer Zeit ein gutes Reinigungsergebnis erzielbar ist.

Erfindungsgemäß ist zur Lösung der vorgenannten Aufgabe eine Verwendung eines Saugreinigungsvorsatzes einer Reinigungsvorrichtung zur Innenreinigung von Kraftfahrzeugen mittels einer Saugluftströmung vorgesehen. Der Saugreinigungsvorsatz ist mit einem einen Saugkanal zum Führen der Saugluftströmung aufweisenden Gehäuse versehen. Im Gehäuse ist zusätzlich zum Saugkanal ein Druckluftkanal zum Führen einer Druckluftströmung vorgesehen und/oder dem Gehäuse ist zusätzlich zum Saugkanal ein Druckluftkanal zum Führen einer Druckluftströmung zugeordnet. Außenseitig ist am Gehäuse ein Griffbereich - vorgesehen zum Greifen des Saugreinigungsvorsatzes mit einer Hand - vorgesehen. Erfindungsgemäß ist ein Schalter, nämlich ein Schwenkhebel, zur Steuerung der Druckluftströmung vorgesehen, wobei der Schalter am Griffbereich und/oder im Bereich und/oder in der Nähe des Griffbereichs derart angeordnet ist, dass der Schalter durch eine den Griffbereich umfassende Hand mit derselben Hand betätigbar ist.

Durch Betätigung des Schalters kann eine Freigabe der Druckluftströmung ausgelöst werden. Daher kann der Druckluftanschluss mit dem Schalter verbunden sein, vorzugsweise unmittelbar.

Zudem wird durch die erfindungsgemäße Anordnung des Schalters eine einfache Bedienung des Saugreinigungsvorsatzes ermöglicht, bei der der Druckluftbetrieb bzw. die Druckluftströmung bei Nutzung des Saugreinigungsvorsatzes zum Saugen in einfacher Weise mit der gleichen Hand, die den Saugreinigungsvorsatz hält, zugeschaltet werden kann. Letztlich wird keine weitere Hand zur Betätigung des Schalters benötigt.

Dies ergibt eine ergonomisch deutlich vereinfachte Verwendung des Saugreinigungsvorsatzes, bei der zudem die Effizienz der Innenreinigung von Kraftfahrzeugen erhöht werden kann.

Eine Erhöhung der Effizienz ergibt sich nicht zuletzt dadurch, dass das Zuschalten der Druckluftströmung zur verbesserten Absaugung von schwer zugänglichen Schmutzpartikeln während des Saugbetriebes einfach durchgeführt werden kann, so dass Zeit eingespart wird. Es versteht sich, dass sich die Effizienzsteigerung auch dann ergibt, wenn während des Druckluftbetriebes keine Saugluftströmung benötigt wird - d.h. während des Druckluftbetriebes der Saugbetrieb eingestellt wird.

Der Schalter kann mit einem Ventil einer Drucklufteinrichtung, insbesondere eines Druckluftspeichers, gekoppelt sein, wobei die Drucklufteinrichtung dem Druckluftkanal zugeordnet ist. Am Druckluftspeicher kann die Druckluft anliegen und nach Freigabe über den Schalter kann dem Druckluftkanal des Saugreinigungsvorsatzes über den Druckluftanschluss die Druckluft zur Verfügung gestellt werden.

Ferner kann der Schalter mit dem Ventil über eine Steuerungsleitung verbunden sein. Durch den Schalter kann über das Ventil eine Freigabe des Druckluftstromes erfolgen und/oder der Druckluftstrom kann abgesperrt und/oder unterbrochen werden - letztlich kann die Druckluftströmung über das Ventil durch Betätigung des Schalters gesteuert werden. Die Stärke der Druckluftströmung, insbesondere der Überdruck, kann mittels eines, insbesondere außerhalb des Saugreinigungsvorsatzes angeordneten, Druckreglers einstellbar sein.

Darüber hinaus kann es insbesondere erfindungsgemäß auch möglich sein, dass über den Schalter eine Steuerung des Druckluftstromes erfolgt, insbesondere der Strömungsgeschwindigkeit, des Überdrucks in der Druckluftströmung und/oder der Temperatur der Druckluftströmung.

Durch die vorteilhafte Anordnung des Schalters an dem Griffbereich lässt sich ferner eine leichte Bedienung des Schalters während des Saugbetriebes gewährleisten, da der Schalter durch wenigstens einen Finger der Hand, die in dem Griffbereich positioniert ist, betätigt werden kann.

Erfindungsgemäß ist wesentlich, dass aus dem Saugbetrieb heraus ein Zuschalten bzw. eine Aktivierung des Druckluftbetriebes schnell und einfach durchgeführt werden kann. Diese vereinfachte Aktivierung ist insbesondere unabhängig davon, ob während des Druckluftbetriebes auch die Saugluftströmung aktiv ist oder nicht.

Ein weiterer Vorteil ergibt sich dadurch, dass der Nutzer eher dazu geneigt ist, die Druckluftströmung häufiger zuzuschalten, da dies mit einem geringen Aufwand einhergeht. Würde der Nutzer weiterhin - wie bislang im Stand der Technik vorgesehen - den Saugbetrieb unterbrechen und seine Hand von dem Griffbereich lösen müssen, so würde er nur bei "dringender Notwendigkeit" die Druckluftströmung zuschalten. Auch hierdurch ergibt sich ein verbessertes Reinigungsergebnis.

Eine Anordnung des Schalters am Griffbereich ist derart zu verstehen, dass der Schalter am Griffbereich angrenzen kann und/oder zumindest im Wesentlichen vollständig am Griffbereich angeordnet ist. Letztlich ist die Anordnung des Schalters so gewählt, dass eine Aktivierung des Druckluftbetriebes ohne ein Lösen der einen Hand von dem Griffbereich möglich ist. Beispielsweise kann der Schalter durch wenigstens einen Finger, insbesondere den kleinen Finger und/oder den Zeigefinger und/oder den Daumen, bedient werden.

Der Griffbereich wird, wie zuvor erwähnt, durch denjenigen außenseitig am Gehäuse vorgesehenen Bereich gebildet, der zum Greifen des Saugreinigungsvorsatzes vorgesehen ist und genutzt wird.

Erfindungsgemäß wird demzufolge die Handhabung des Saugreinigungsvorsatzes erleichtert, wobei der Saugreinigungsvorsatz im Griffbereich von einer Hand eines Benutzers umfasst und somit eine erleichterte Bedienung gewährleistet werden kann; und zwar während der Aktivierung des Druckluftbetriebes und/oder während der Zurverfügungstellung der Saugluftströmung. In jedem Falle ist ein vorgegebener, vorzugsweise eindeutig erkennbarer, Griffbereich vorgesehen.

Insbesondere ist der Griffbereich außenseitig bzw. umfangsmäßig nicht begrenzt, so dass ein Umfassen des Griffbereichs aus verschiedenen Positionen für den Benutzer des Saugreinigungsvorsatzes ohne Weiteres möglich ist. Letztlich kann der Griffbereich allseitig frei zugänglich sein. Dabei ist es im Übrigen so, dass der Griffbereich durch keinen Bügel oder dergleichen überbrückt wird und umfangsmäßig begrenzt ist und somit frei zugänglich ist, so dass eine Benutzung des Saugreinigungsvorsatzes oder ein Umfassen des Griffbereichs aus jeder Nutzersituation heraus möglich ist.

Erfindungsgemäß ist vorgesehen, dass der Schalter, nämlich der Schwenkhebel, durch wenigstens eine Feder federbelastet ist. Durch die Federbelastung, also eine Betätigung des Schalters gegen die Federkraft, kann eine Betätigung des Schalters, insbesondere des Schwenkhebels, ermöglicht werden. Im (feder-)unbelasteten Zustand ist der Schalter damit geschlossen.

Alternativ oder zusätzlich kann der Schalter auch als Druckknopf-Schalter und/oder als Schaltstößel ausgebildet sein. Bei der Druckknopf-Ausbildung des Schalters kann vorgesehen sein, dass durch einen auf den Schalter ausgeübten Druck bzw. einer auf den Schalter ausgeübten Kraft die Freigabe der Druckluftströmung ermöglicht wird. Insbesondere kann der Schalter als Druckschalter ausgebildet werden, vorzugsweise als mechanischer Druckschalter, der durch Druckänderung eines gasförmigen und/oder flüssigen Mediums betätigbar ist.

Bei der Ausbildung des Schalters als Stößel bzw. Schaltstößel kann vorgesehen sein, dass die Freigabe durch Betätigen des Stößels erfolgt, wobei unterschiedliche Stößelformen verwendet werden können. Der Stößel kann mit weiteren Schalterelementen derart zusammenwirken, dass ein Freischalten der Druckluftströmung bei Betätigung des Schalters erfolgen kann. Gegebenenfalls ist ein Kopplungselement vorgesehen, dass den Stößel in und/oder außer Eingriff mit dem Schalterelement bringt. Letztlich ist der Stößel zur Übertragung der Bewegung des externen Betätigers vorgesehen, wobei die Bewegung in das Innere des Schalters bzw. an weitere Schalterelemente übertragbar ist. Demzufolge kann ein Schließen oder Öffnen von Kontakten eingeleitet werden. Gegebenenfalls wird der Stößel durch Druckfedern in die Aus-Stellung (Sperrstellung) gedrängt.

Erfindungsgemäß weist der Schalter einen Schwenkhebel auf, der an seinem einen Ende schwenkbar gelagert ist und dessen anderes Ende zur Schalterbetätigung ausgebildet ist. Insbesondere ragt das zur Schalterbetätigung ausgebildete andere Ende in den Griffbereich, so dass eine einfache Betätigung des Schalters erfolgen kann.

Besonders bevorzugt ist vorgesehen, dass der Schalter eine möglichst geringe Aufbauhöhe von vorzugsweise kleiner als 6 cm, bevorzugt zwischen 0,5 bis 5 cm, weiter bevorzugt kleiner als 2 cm, vorzugsweise kleiner als 1,5 cm, aufweist und sich insbesondere der Form des Gehäuses und/oder des Bereichs, an dem er angeordnet ist, anpasst bzw. anschmiegt. Dies erleichtert die Handhabung und ermöglicht einen verbesserten Zugang an schlecht zugängliche Stellen im Innenraum des Kraftfahrzeuges.

Weiter bevorzugt kann das Gehäuse des Schalters wenigstens zweiteilig ausgebildet sein, nämlich insbesondere der verschwenkbare bzw. verlagerbare Schwenkhebel, der zur Betätigung des Schalters dienen kann, und ein feststehendes Schaltergehäuse, das zur Anordnung des verschwenkbaren Schwenkhebels und/oder des Druckluftanschlusses dient, aufweisen. In dem Schaltergehäuse können die weiteren Bestandteile des Schalters, die nicht in dem Schwenkhebel angeordnet sind, vorgesehen sein. Das Schaltergehäuse kann unmittelbar fest mit dem Gehäuse des Saugreinigungsvorsatzes verbunden sein. Insbesondere ist das Schaltergehäuse zumindest bereichsweise am Griffbereich angeordnet. Das Schaltergehäuse kann formschlüssig, kraftschlüssig und/oder stoffschlüssig mit dem Gehäuse des Saugreinigungsvorsatzes verbunden sein.

Der Schwenkhebel kann um eine Schwenkachse herum verschwenkbar ausgebildet sein, insbesondere wobei der Schwenkhebel mit seinem einem Ende an dem Schaltergehäuse gelagert sein kann. Das weitere bzw. andere Ende des Schwenkhebels kann zur Betätigung dienen und insbesondere einen Betätigungsabschnitt aufweisen.

Vorzugsweise ist der federbelastete der Schwenkhebel von wenigstens einer die Druckluftströmung sperrende Sperrstellung in wenigstens eine die Druckluftströmung freigebende Freigabestellung, vorzugweise durch eine auf den Schalter, insbesondere auf den Schwenkhebel, entgegen der Federkraft der Feder ausgeübte Verstellkraft, verschwenkbar und/oder verlagerbar. Die ausgeübte Verstellkraft kann durch die Hand des Benutzers, die den Griffbereich umfasst, ausgeübt werden, insbesondere durch wenigstens einen Finger. Die ausgeübte Verstellkraft muss dabei größer als die Federkraft der Feder sein, so dass ein Verschwenken des Schalters bzw. des Schwenkhebels erfolgen kann.

Ferner kann bei einer weiteren bevorzugten Ausführungsform der Schwenkhebel von der Freigabestellung in die Sperrstellung durch die Federkraft der Feder verschwenkbar und/oder verlagerbar sein. Wenn der Schalter bzw. der Schwenkhebel in die Sperrstellung zurückgeführt werden soll, wird insbesondere keine Verstellkraft mehr auf den Schalter, insbesondere den Schwenkhebel, ausgeübt. Letztlich kann die Sperrstellung gemeinsam mit der "Ruhestellung" der Feder nach der Freigabestellung - das heißt nach Beendigung der Druckluftströmung - wieder eingenommen werden. Nimmt der Nutzer also den Finger vom Schalter, insbesondere vom Schwenkhebel, wird dieser automatisch in die Sperrstellung zurückgeführt.

Erfindungsgemäß ist die Feder zumindest mittelbar mit einem, insbesondere stabförmigen, zumindest im Wesentlichen zylinderförmigen und/oder stößelförmigen, Betätigungsmittel derart verbunden, dass das Betätigungsmittel zur Rotation und/oder Betätigung eines Auslösemittels, vorzugsweise einer Exzenterscheibe, ausgebildet ist. Die Rotation und/oder Betätigung des Auslösemittels kann zum einen bei Verschwenkung und/oder Verlagerung des Schwenkhebels von der Sperrstellung in die Freigabestellung und/oder zum anderen bei der Verschwenkung und/oder Verlagerung von der Freigabestellung in die Sperrstellung erfolgen.

Das Auslösemittel kann derart ausgebildet sein, dass es die Freigabe und/oder die Sperrung der Druckluftströmung bewirkt. Das Betätigungsmittel dient letztlich zur Kopplung des Schalters bzw. des Schwenkhebels mit dem Auslösemittel. Bevorzugt ist das Betätigungsmittel unmittelbar mit dem Auslösemittel verbunden, insbesondere wobei das Auslösemittel stirnseitig an das Betätigungsmittel angeordnet werden kann und/oder das Betätigungsmittel zumindest im Wesentlichen mittig durch das Auslösemittel geführt ist. Insbesondere ist das Betätigungsmittel durch das Auslösemittel hindurchgeführt.

Bei einer weiteren, ganz besonders bevorzugten Ausführungsform ist vorgesehen, dass das Auslösemittel mit einer, vorzugsweise zumindest im Wesentlichen kugelförmigen, Sperre zusammenwirkt. Die Sperre kann insbesondere verschieblich in einem eine Kanalöffnung aufweisenden Führungskanal gelagert sein. Alternativ oder zusätzlich kann vorgesehen sein, dass die im Führungskanal anliegende Druckluftströmung in der Sperrstellung des Schwenkhebels bzw. Schalters durch die die, vorzugsweise zumindest im Wesentlichen kreisrunde, Kanalöffnung verschließende Sperre gesperrt wird.

Der Führungskanal kann mit dem Druckluftanschluss verbunden sein, insbesondere wobei in dem Führungskanal die Druckluft anliegt und erst durch die Freigabe der Sperre - die über die Freigabestellung des Schwenkhebels eingeleitet wird - die Druckluft zur Verfügung gestellt wird.

Letztlich kann bei einer weiteren bevorzugten Ausführungsform vorgesehen sein, dass in der Freigabestellung des Schwenkhebels die Sperre durch das Auslösemittel derart verschoben worden ist, dass die Druckluftströmung durch die Kanalöffnung des Führungskanals in den Druckluftkanal führbar ist.

Der Führungskanal kann vorzugsweise derart ausgebildet sein, dass die Sperre - zumindest mittelbar - entlang der Innenwände des Führungskanals verschiebbar ist. Die Freigabestellung der Sperre kann derart ausgebildet sein, dass die Druckluftströmung an der Sperre "vorbeiströmen" kann. Die Sperre kann auf wenigstens einem, bevorzugt wenigstens vier, als Vorspring ausgebildeten Steg des Führungskanals aufliegen und an die Seitenwände des Führungskanals und/oder weitere Stege des Führungskanals angrenzen, insbesondere wobei die, vorzugsweise kugelförmige, Sperre längs des Steges, vorzugsweise angrenzend an die Stege der Seitenwände, in dem Führungskanal in die Freigabestellung überführt werden kann.

In der Sperrstellung kann die Sperre derart angeordnet sein, dass die Druckluftströmung nicht an der Sperre vorbei aus dem Führungskanal austreten kann. Insbesondere grenzt die Sperre an einen Anschlag bzw. an die Kanalöffnung in der Sperrstellung derart an, so dass der Führungskanal und die Kanalöffnung verschlossen und die Druckluftströmung gesperrt wird.

Bei einer weiteren, ganz besonders bevorzugten Ausführungsform des Erfindungsgedankens weist das Auslösemittel wenigstens einen, vorzugsweise zwei, Vorsprung auf, der derart ausgebildet ist, dass die Sperre zur Öffnung der Kanalöffnung des Führungskanals bzw. zur Freigabe der Druckluftströmung verschiebbar ist. Letztlich kann der Vorsprung mit der Sperre zusammenwirken - und zwar derart, dass die Sperre durch die von dem Vorsprung übertragene Kraft verschoben werden kann.

Vorzugsweise ist der Schwenkhebel in zwei entgegengesetzte Richtungen in jeweils einer Freigabestellung ausgehend von der Sperrstellung verschwenkbar und/oder verlagerbar. Bevorzugt ist die Sperrstellung mittig zwischen den beiden maximalen Auslenkungen in den Freigabestellungen angeordnet. Insbesondere kann der Schwenkhebel nach links und nach rechts in die Freigabestellung von der mittig angeordneten Sperrstellung verschoben werden. Besonders vorteilhaft ist dies zur Betätigung mit unterschiedlichen Fingern des Schwenkhebels und/oder zur Verwendung des Saugreinigungsvorsatzes sowohl für Linkshänder als auch für Rechtshänder. Dies ergibt eine verbesserte ergonomische Anpassbarkeit sowohl für Linkshänder als auch für Rechtshänder, so dass ein für die Anwendungssituation nutzerfreundlicher ausgebildeter Saugreinigungsvorsatz bereitgestellt werden kann.

Insbesondere kann der Schalter an dem der Saugöffnung des Saugreinigungsvorsatzes abgewandten Ende des Griffbereichs angeordnet sein. Eine derartige Anordnung ist aus unterschiedlichen Gesichtspunkten vorteilhaft.

Zum einen kann so an dem Schalter vorzugsweise unmittelbar der Druckluftanschluss angeordnet werden. Somit "stören" keine Leitungen oder dergleichen der Druckluftströmung, die zum Druckluftanschluss geführt werden, das Umgreifen bzw. das Greifen des Saugreinigungsvorsatzes. Der Griffbereich kann somit frei von Druckluftleitungen und/oder Druckluftanschlüssen gehalten werden.

Zum anderen ist vorteilhaft, dass das Betätigen auf ergonomische einfache Art und Weise, insbesondere durch den kleinen Finger der Hand, die den Griffbereich umgreift, durchgeführt werden kann.

Durch die endseitige Anordnung des Schalters, insbesondere des Schwenkhebels, an dem Griffbereich kann auch eine "Fehlzuschaltung" der Druckluftströmung zumindest im Wesentlichen vermieden werden. Der Schwenkhebel kann zwar durch die Hand, die den Griffbereich umfasst, verschwenkt und/oder verlagert werden, jedoch kann ein unerwünschtes Betätigen des Schwenkhebels zumindest im Wesentlichen sicher vermieden werden. Wäre der Schalter beispielsweise mittig am Griffbereich angeordnet, könnte vergleichsweise einfach die Druckluftströmung "aus Versehen" zugeschaltet werden und somit letztlich die Reinigungseffizienz herabsetzen und/oder den Saugbetrieb stören.

Bei einer besonders bevorzugten Ausführungsform liegt die Querschnittsfläche der Druckluftöffnung des Druckluftkanals zwischen 0,5 mm² bis 200 mm², bevorzugt zwischen 1 mm² bis 80 mm² und weiter bevorzugt zwischen 10 mm² bis 30 mm². Vorzugsweise ist die Druckluftöffnung derart ausgebildet, dass sich ein strahlförmiger Austritt der Druckluftströmung ergibt. Dabei sollte der Strahlkegel des austretenden Druckluftstrahls kleiner 30°, vorzugsweise kleiner 20° und insbesondere kleiner 10° sein. Der strahlförmige Austritt der Druckluftströmung kann zur Fokussierung und punktuellen Verwendung der Druckluftströmung dienen. Vorzugsweise weist die Druckluftöffnung des Druckluftkanals einen kreisförmigen Querschnitt auf. Darüber hinaus kann der Druckluftkanal einen Durchmesser zwischen 0,5 mm bis 20 mm, weiter bevorzugt zwischen 1 mm bis 10 mm und insbesondere zwischen 4 mm bis 6 mm, aufweisen. Der vorgenannte Durchmesser ist hinreichend groß gewählt, so dass eine punktuelle und zielgerichtete Aufwirbelung von Schmutzpartikeln in schwer zugänglichen Bereichen gewährleistet werden kann.

Vorzugsweise liegt demgegenüber die Querschnittsfläche der Saugöffnung des Saugkanals zwischen 100 mm² bis 1.000 mm², bevorzugt zwischen 200 mm² bis 800 mm², weiter bevorzugt zwischen 300 mm² bis 600 mm² und insbesondere zumindest im Wesentlichen zwischen 400 mm² bis 500 mm². Durch den vorgenannten bevorzugten Bereich der Querschnittsfläche der Saugöffnung kann in einfacher Weise ein großer Flächenbereich im Fahrzeuginnenraum, insbesondere am Boden und/oder an den Polstern, in kurzer Zeit abgesaugt werden.

Aus den vorstehenden Bereichsangaben für die Druckluftöffnung des Druckluftkanals und die Saugöffnung des Saugkanals ergibt sich, dass die Druckluftöffnung im Vergleich zur Saugöffnung bevorzugt sehr viel kleiner ist. Erfindungsgemäß ist vorgesehen, dass das Verhältnis der Querschnittsfläche der Saugöffnung zur Querschnittsfläche der Druckluftaustrittsöffnung zwischen 10:1 bis 100:1, bevorzugt zwischen 12:1 bis 50:1, weiter bevorzugt zwischen 15:1 bis 25:1 und insbesondere zwischen 18:1 bis 20:1, liegt. Demgemäß ist vorzugsweise eine wesentlich größere Querschnittsfläche der Saugöffnung im Vergleich zur Druckluftöffnung vorgesehen. Bei einer bevorzugten Ausführungsform steht damit einem strahlförmigen Druckluftstrom eine großflächige Saugluftströmung gegenüber. Die vorgenannten erfindungsgemäßen Verhältnisse zwischen den Querschnittsflächen bedingen eine optimale Reinigungseffizienz, da letztlich ein Absaugen und/oder eine Entfernung der Schmutzpartikel über die Saugluftströmung erfolgt und die Druckluftströmung bedarfsweise zur Aufwirbelung der Schmutzpartikel, insbesondere aus schlecht zugänglichen Bereichen, dient. Ferner kann mittels der Druckluftströmung eine Verlagerung und/oder Verblasung der Schmutzpartikel in leicht zugängliche Bereiche, vorzugsweise im Bereich des Fahrzeugbodens, erfolgen, wobei die Schmutzpartikel in den leicht zugänglichen Bereichen ziel- und zweckgerichtet mittels der Saugluftströmung entfernbar bzw. aufsaugbar sind.

Bei Versuchen im Zusammenhang mit der vorliegenden Erfindung ist festgestellt worden, dass für den konkreten Anwendungsfall der Innenreinigung von Fahrzeugen ein Überdruck der Druckluft im Druckluftkanal zwischen 5 bis 10 bar, bevorzugt zwischen 6 bis 8 bar, gute Ergebnisse erbringt. Dabei wird der Druckbetrieb in der Regel nur diskontinuierlich eingeschaltet, während der Saugbetrieb kontinuierlich erfolgt. Dabei ist üblicherweise während des Saugbetriebes ein Unterdruck zwischen 0,3 bis 0,8 bar, bevorzugt zwischen 0,4 bis 0,5 bar, vorgesehen. Es ist festgestellt worden, dass bei Einschalten des Druckbetriebes bei laufendem Saugbetrieb eine hervorragende Innenreinigung möglich ist, da die Druckluftströmung zielgerichtet an die schwer zugängliche Stelle im Innenraum des Fahrzeugs gelangen kann und dabei ohne Weiteres den Unterdruck beim Saugbetrieb überwindet. Wird der Druckbetrieb dann beendet, erfolgt unmittelbar die Absaugung über den Absaugkanal und es werden die aufgewirbelten Partikel aus der Luft und am zu reinigenden Untergrund abgesaugt.

Darüber hinaus kann bei einer weiteren, besonders bevorzugten Ausführungsform der Erfindung das Gehäuse einen zumindest bereichsweise den Griffbereich bildenden Griffabschnitt, einen mit dem Griffabschnitt lösbar verbindbaren Gehäusestutzen und ein mit dem Gehäusestutzen lösbar verbindbares Endstück aufweisen. Demgemäß kann das Gehäuse mehrteilig ausgebildet sein, so dass die einzelnen Bestandteile des Gehäuses austauschbar sind. Dies ist insbesondere für das Endstück relevant, da dieses in der Regel dem größten Verschleiß unterliegt. Im Übrigen hat die Mehrteiligkeit des Gehäuses den Vorteil, dass ein Zugang, insbesondere zu dem Saugkanal und/oder dem Druckluftkanal, die sich bevorzugt innerhalb des Gehäuses befinden, möglich ist. Dies spielt auch bei Wartungs- oder Reparaturarbeiten, bei denen ein Zugang zum Inneren des Staubsaugreinigungsvorsatzes erforderlich ist, eine Rolle.

Die vorgenannten Komponenten, nämlich der Gehäusestutzen, das Endstück und der Griffabschnitt, können insbesondere ineinandergesteckt werden. Letztlich kann vorgesehen sein, dass der Gehäusestutzen mit dem Griffabschnitt und/oder das Endstück mit dem Gehäusestutzen und/oder dem Griffabschnitt formschlüssig, kraftschlüssig und/oder reibschlüssig verbunden ist. Ganz besonders bevorzugt ist eine reibschlüssige Verbindung, insbesondere in Form einer Steckverbindung, vorgesehen. Im Gebrauchszustand des Saugreinigungsvorsatzes sind die vorgenannten Teile - das heißt der Griffabschnitt, das Endstück und der Gehäusestutzen - fest miteinander verbunden. Werden jedoch beispielsweise der Griffabschnitt und der Gehäusestutzen gegeneinander verdreht, so kann die Verbindung gelöst werden - z. B. zum Austausch des Gehäusestutzens.

Insbesondere ist der Griffabschnitt mit einem Anschlussbereich in den Gehäusestutzen einsteckbar. Der Gehäusestutzen weist letztlich eine zu dem Anschlussbereich korrespondierende Aufnahme auf. Insbesondere grenzt der Anschlussbereich des Griffabschnitts an die Innenwandung des Gehäusestutzen an. Alternativ oder zusätzlich kann vorgesehen sein, dass der Gehäusestutzen mit einem Anschlussbereich in das Endstück einsteckbar ist, wobei der Anschlussbereich des Endstücks innenseitig an die Innenwandung des Endstücks angrenzen und das Endstück einen zu dem Anschlussbereich des Gehäusestutzens korrespondierenden Aufnahmebereich aufweisen kann. Darüber hinaus ist es auch möglich, dass der Griffabschnitt in den Gehäusestutzen und/oder das Endstück in den Gehäusestutzen einsteckbar ist. Zu diesem Zweck sind die Anschlussbereiche an dem Endstück bzw. an dem Gehäusestutzen vorgesehen.

Vorteilhafterweise ist eine Verjüngung des Saugkanals in dem Gehäusestutzen vorgesehen, wobei die zumindest im Wesentlichen hohlzylindrische Form des Griffabschnitts in eine zumindest im Wesentlichen schlitzartige Form übergeht.

Darüber hinaus kann der Gehäusestutzen zumindest bereichsweise konisch zulaufende, insbesondere sich zur Saugöffnung hin verjüngende, Übergangsflächen aufweisen. Vorzugsweise weist der Gehäusestutzen und/oder das Endstück zwei Seitenhauptflächen auf, die gemeinsam mit einer oberen Seitenfläche und einer unteren Seitenfläche die Mantelfläche des Gehäusestutzens und/oder des Endstücks bilden. In diesem Zusammenhang kann vorgesehen sein, dass die Seitenhauptflächen im Vergleich zu der oberen Seitenfläche und/oder der unteren Seitenfläche eine um bis zu 1000%, vorzugsweise zwischen 300% bis 800%, größer ausgebildete Fläche als die obere und/oder untere Seitenfläche aufweisen. Folglich kann so eine zumindest im Wesentlichen langgestreckte bzw. schlitzartige Form der Saugöffnung und des Saugkanals erreicht werden. Durch die vorgenannte Form wird eine Handhabung bei der Innenreinigung von Kraftfahrzeugen erleichtert, da der Gehäusestutzen und/oder das Endstück zur Saugöffnung hin eine schlanke Form haben, um einen besseren Zugang zu engen und schlecht zugänglichen Bereichen im Innenraum eines Fahrzeugs zu ermöglichen.

Ferner kann der Saugkanal und/oder der Druckluftkanal zumindest abschnittsweise im oder am Griffabschnitt, im oder am Gehäusestutzen und/oder im oder am Endstück vorgesehen sein. Insbesondere wird der Saugkanal innenseitig im Griffabschnitt, im Gehäusestutzen und im Endstück entlanggeführt, wobei die Saugluftströmung endseitig an der dem Gehäusestutzen abgewandten Öffnung des Endstückes austritt bzw. eingesogen wird. Der Druckluftkanal kann ferner am Saugluftkanal angeordnet oder dem Gehäuse zugeordnet sein, wodurch sich eine Anordnung des Druckluftkanals am Gehäusestutzen ergeben kann. Insbesondere verjüngt sich der Gehäusestutzen und/oder der Saugkanal in Richtung des Endstücks. In dem verjüngten Bereich des Gehäusestutzens und/oder des Saugkanals kann demgemäß eine höhere Strömungsgeschwindigkeit im Vergleich zu dem verbreiterten Bereich vorgesehen sein.

Weiterhin kann der Saugkanal ein in den Gehäusestutzen eingesetztes bzw. einsetzbares Rohrstück aufweisen, insbesondere wobei das Rohrstück in den Griffabschnitt und/oder in das Endstück ragt. Das Rohrstück kann lösbar mit dem Endstück und/oder dem Griffabschnitt verbindbar sein. Zudem kann das Rohrstück einen Innendurchmesser von (40 ± 10) mm aufweisen.

Der Gehäusestutzen kann einen Außendurchmesser von (55 ± 15) mm aufweisen.

Folglich kann in dem Gehäusestutzen der Druckluftkanal, der durch die Wandungen des Rohrstücks von dem Saugkanal getrennt sein kann, angeordnet sein. Das Rohrstück kann sich zu dem Endstück hin verjüngen und so vorteilhafte Strömungsverhältnisse der Saugluftströmung gewährleisten.

Vorzugsweise ist der insbesondere als Druckluftleitung ausgebildete Druckluftkanal am Rohrstück und/oder am Gehäusestutzen gehalten und/oder angeordnet.

Die Druckluftleitung ist vorzugsweise als Schlauch, insbesondere aus Kunststoff bestehend, ausgebildet.

Am Rohrstück können eine Mehrzahl an Haltemitteln zur Verrastung der Druckluftleitung bzw. zum Anklemmen der Druckluftleitung vorgesehen sein. Die Druckluftleitung kann lösbar mit dem Rohrstück verbunden sein.

Durch die lösbare Verbindung zwischen dem Gehäusestutzen und dem Griffabschnitt kann ein Zugang zur Druckluftleitung im Inneren des Saugreinigungsvorsatzes sichergestellt werden. Die Druckluftleitung kann im Endstück enden, wobei die Druckluftströmung entlang des Endstücks vorzugsweise in einem vom Saugkanal abgetrennten Kanal geführt wird.

Alternativ oder zusätzlich kann vorgesehen sein, dass der Druckluftkanal in dem Gehäusestutzen angeordnet ist und, vorzugsweise, zumindest bereichsweise von dem Saugkanal in dem Gehäusestutzen durch wenigstens eine Trennleiste und/oder -wandung getrennt ist. Die Trennleiste kann ferner insbesondere im Inneren des Gehäusestutzens, vorzugsweise angrenzend an eine Innenwandung des Gehäusestutzens, angeordnet sein kann, so dass letztlich der Druckluftkanal von dem Saugkanal durch die Trennleiste beabstandet bzw. getrennt werden kann. Vorzugsweise ist die Trennleiste über wenigstens eine Schraubverbindung fest mit dem Gehäusestutzen verbunden.

Vorzugsweise ist der zumindest bereichsweise insbesondere als Druckluftleitung ausgebildete Druckluftkanal an der Trennleiste gehalten und/oder angeordnet. Die Druckluftleitung ist, wie zuvor erläutert, bevorzugt als Schlauch, insbesondere aus Kunststoff bestehend, ausgebildet.

Die Trennleiste kann bevorzugt derart ausgebildet sein, dass der Druckluftkanal lösbar an der Trennleiste durch Anklemmen mittels Klemm- und/oder Haltemitteln befestigbar ist. An der Trennleiste kann dementsprechend eine Mehrzahl an Haltemitteln zur Verrastung der Druckluftleitung bzw. zum Anklemmen der Druckluftleitung vorgesehen sein.

Der Druckluftkanal kann an der Innenwand des Gehäusestutzens angrenzen, wobei die Trennleiste insbesondere mit der Innenwand des Gehäusestutzens, vorzugsweise lösbar, verbunden sein kann.

Alternativ oder zusätzlich kann vorgesehen sein, dass die Druckluftströmung von dem Schalter an die zumindest bereichsweise den Druckluftkanal bildende Druckluftleitung übergebbar ist bzw. in der Freigabestellung des Schalters übergeben wird. Insbesondere ist vorgesehen, dass die Druckluftleitung innenseitig in dem Griffabschnitt, dem Gehäusestutzen und/oder dem Endstück angrenzend an eine jeweilige Innenwandung geführt ist, insbesondere mit der jeweiligen Innenwandung verbunden ist und/oder fixiert ist. Vorzugsweise ist zumindest bereichsweise in dem Griffabschnitt an der Innenwandung und/oder in dem Gehäusestutzen an der Innenwand und/oder in dem Endstück an der Innenwandung wenigstens eine Vertiefung zur zumindest bereichsweisen Aufnahme der Druckluftleitung vorgesehen. Die Vertiefung kann korrespondierend zur Form der Druckluftleitung ausgebildet sein.

Im Übrigen kann der im Gehäuse vorgesehene Druckluftkanal ventilfrei ausgebildet sein. Insbesondere ist ein Ventil der Drucklufteinrichtung dem Schalter zugeordnet und über den Schalter steuerbar. Die Auslagerung des Ventils führt dazu, dass sowohl das Gewicht als auch der Platzbedarf des Saugreinigungsvorsatzes so gering wie möglich gehalten werden kann.

Bei einer weiteren bevorzugten Ausführungsform weist der Griffabschnitt zwei äußere Anschlussenden und einen zwischen den Anschlussenden vorgesehenen Griffabschnittsbereich auf, wobei die Außendurchmesser der Anschlussenden jeweils größer sind als der Außendurchmesser des Griffabschnittsbereichs. Dabei kann vorgesehen sein, dass der Griffabschnitt innenseitig nicht die vorgenannten Verhältnisse der Innendurchmesser der Anschlussenden zu dem Innendurchmesser des Griffabschnittsbereichs aufweist. Letztlich kann der Innendurchmesser des Griffabschnittsbereichs zumindest im Wesentlich gleich groß zu den Innendurchmessern der Anschlussenden ausgebildet sein. Der Griffabschnittsbereich dient zur einfachen Handhabbarkeit des Saugreinigungsvorsatzes.

Bei in der Praxis bekannten Staubsaugdüsen ist keine vertiefte Angriffsfläche für die Hände des Nutzers vorgesehen. Ergonomisch ist der mittige Griffbereich am Griffabschnitt sehr vorteilhaft, da ein vorgegebener Bereich - entsprechend der Ergonomie des durchschnittlichen Anwenders ausgebildet - als Angriffsfläche vorhanden ist, was gerade bei einer längeren Benutzung entscheidend ist. Der Griffabschnitt kann eine Länge von (250 ± 50) mm aufweisen, wobei der Außendurchmesser des Griffabschnittsbereichs (45 ± 10) mm betragen kann.

Neben der technischen Funktionalität des Griffabschnitts ergibt die zuvor beschriebene Form des Griffabschnittsbereichs durch die vorbeschriebene Form des Griffabschnittsbereichs eine besondere ästhetische Gestaltung, die sich deutlich von bisher bekannten Saugreinigungsvorsätzen abhebt und letztlich durch ihre funktionale Ausstrahlung ansprechend für den Nutzer ist. Besonders bevorzugt ist, wenn der Griffabschnittsbereich auch eine Anzeichenfunktion, insbesondere haptische Mittel, wie eine Mehrzahl parallel verlaufender Rillen, aufweist. Die haptischen Mittel können dem Nutzer signalisieren, dass ein Anfassen des Saugreinigungsvorsatzes in diesem Bereich vorgesehen ist.

Durch den ergonomisch geformten Griffbereich und/oder Griffabschnittsbereich kann ein ermüdungsfreies Arbeiten ermöglicht werden. Dieses zeichnet sich letztlich dadurch aus, dass die zur Halterung des Saugreinigungsvorsatzes benötigte Griffkraft wesentlich länger als bei der im Stand der Technik bekannten Staubsaugdüse aufgebracht werden kann. Dabei versteht es sich, dass die Muskulatur in der Hand des Nutzers nicht überstrapaziert und demgemäß ein frühzeitiges Nachlassen der Griffkraft vermieden werden kann. Demzufolge lässt sich eine sichere Handhabung des erfindungsgemäßen Staubreinigungsvorsatzes in teilweise engen Fahrzeuginnenräumen gewährleisten.

Bei einer besonders bevorzugten Ausführungsform der Erfindung ist vorgesehen, dass der Schwenkhebel in den, insbesondere vertieften und/oder den Griffbereich bildenden, Griffabschnittsbereich des Griffabschnitts ragt. Ganz besonders bevorzugt ragt der Schwenkhebel mit seinem ersten, freien Ende in den Griffabschnittsbereich. Durch die vorgenannte vorteilhafte Anordnung des Schwenkhebels wird eine ergonomisch besonders einfache Schalterbetätigung ermöglicht. Die den Griffabschnittsbereich umfassende Hand kann mit wenigstens einem Finder den Schwenkhebel zur Schalterbetätigung verschwenken.

Vorzugsweise weist der Griffbereich und/oder der Griffabschnittsbereich außenseitig zumindest bereichsweise eine Riffelung und/oder eine strukturierte Oberfläche auf. Demgemäß kann zum einen eine erhöhte Grifffestigkeit ermöglicht und zum anderen eine optische Kennzeichnung der Grifffläche erzeugt werden. Die Rillen können einen Abstand von (5 ± 2) mm zueinander aufweisen.

Folglich wird auch die Haptik durch die Riffelung und/oder die strukturierte Oberfläche verbessert und dem Nutzer ferner ein weiteres Signalzeichen (haptisches Anzeichen) gegeben, welcher Bereich des Saugreinigungsvorsatzes den Griffbereich bildet. Aus formalästhetischen Gesichtspunkten ist besonders vorteilhaft, dass der Griffabschnittsbereich zumindest im Wesentlichen optisch der Formgebung des Saugschlauches entsprechen kann.

Ganz besonders bevorzugt ist der Griffabschnittsbereich und/oder der Griffabschnitt rotationssymmetrisch und/oder spiegelsymmetrisch zu einer Mittellängsachse ausgebildet. Die Symmetrie ergibt eine ergonomisch angepasste Handhabung des Saugreinigungsvorsatzes sowie insbesondere eine ästhetisch ansprechende Ausbildung des Griffabschnitts. Letztlich handelt es sich sowohl beim Griffabschnittsbereich als auch beim Griffabschnitt um einen hülsenförmigen Körper, der in einfacher Weise hergestellt werden kann.

Gemäß einer weiteren vorteilhaften Ausführungsform ist eine Leuchteinrichtung, vorzugsweise mittels wenigstens einer, vorzugsweise zwei, LED, an dem Rohrstück, dem Endstück, dem Gehäusestutzen und/oder dem Griffabschnitt, bevorzugt außenseitig, insbesondere dem Endstück zugewandt, vorgesehen. Die Leuchteinrichtung kann mit wenigstens einer Leitung zur Stromführung verbunden sein. Die Leitung kann vorzugsweise innenseitig am Gehäusestutzen, außenseitig auf dem Rohrstück und/oder innenseitig des Endstücks und/oder zumindest bereichsweise an der Trennleiste angeordnet und/oder gehalten sein.

Insbesondere ist der Schalter, vorzugsweise das Schaltergehäuse, zumindest bereichsweise an dem der Saugöffnung abgewandten Anschlussende angeordnet, insbesondere wobei der Schwenkhebel zumindest endseitig in den insbesondere vertieften Bereich des Griffabschnittsbereichs ragt bzw. in diesem angeordnet ist.

Vorzugsweise ist ein Stromanschluss, insbesondere ein 4-poliger Stecker, der mit der Leuchteinrichtung über die wenigstens eine Leitung verbunden ist, am Gehäuse angeordnet, vorzugsweise benachbart zu dem Druckluftanschluss.

Insbesondere kann der Stromanschluss an dem Schalter, bevorzugt an dem Schaltergehäuse angeordnet sein.

Die Leuchteinrichtung kann innerhalb des Saugkanals und/oder außerhalb des Saugkanals am Gehäusestutzen, am Griffabschnitt und/oder am Endstück montiert sein. Letztlich wird durch die Leuchteinrichtung, insbesondere wenn der Lichtkegel der Saugöffnung zugewandt ist, sichergestellt, dass der zu reinigende Bereich ausgeleuchtet wird.

An dem Stromanschluss kann alternativ oder ergänzend zu der elektrischen Leitung der Leuchteinrichtung die Steuerungsleitung, insbesondere vorgesehen zur Steuerung des außerhalb des Saugreinigungsvorsatzes angeordneten Ventils, angeschlossen werden.

Zur Vermeidung der Verschmutzung der LED, zur Erhaltung der Leuchtkraft der LED und/oder zur Minimierung der mechanischen Belastung kann eine Schutzeinrichtung, insbesondere eine LED-Abdeckung, mit der Leuchteinrichtung verbunden werden. Die LED-Abdeckung und/oder die Schutzeinrichtung kann turnusmäßig ausgetauscht werden. Die Schutzreinrichtung kann ferner lösbar mit dem Gehäusestutzen, dem Endstück, dem Griffabschnitt und/oder dem Saugkanal verbindbar, insbesondere verrastbar, sein.

Darüber hinaus kann auch eine Mehrzahl von Leuchtmitteln, insbesondere LEDs, innerhalb oder am Gehäuse vorgesehen sein. Sofern die Leuchtmittel und/oder die Leuchteinrichtung innerhalb des Gehäuses angeordnet sind, können der Gehäusestutzen, das Endstück, das Rohrstück, der Griffabschnitt und/oder der Bügel zumindest abschnittsweise transparent und/oder transluzent ausgebildet sein.

Vorzugsweise kann die Leuchteinrichtung ziel- und zweckgerichtet die abzusaugende und/oder zu reinigende Fläche im Fahrzeuginnenraum beleuchten. Vorteilhafterweise strahlt die Leuchteinrichtung über das Endstück und/oder den Gehäusestutzen hinweg und ist am Gehäusestutzen und/oder am Griffabschnitt befestigt. Die Leuchteinrichtung kann insbesondere schlecht ausgeleuchtete Bereiche, beispielsweise zwischen den Fahrzeugsitzen, im Fahrzeuginnenraum beleuchten.

Bevorzugt ist am Endstück, am Gehäusestutzen und/oder am Rohrstück ein zur Aufnahme der Leuchteinrichtung ausgebildeter Kanal vorgesehen. Alternativ kann die Leuchteinrichtung lösbar mit der Trennleiste befestigt werden.

Vorzugsweise ist der Kanal und/oder die Leuchteinrichtung im Gehäusestutzen integriert bzw. in dem Gehäusestutzen angeordnet, insbesondere außenseitig, dem Gehäusestutzen zugewandt auf dem Rohrstück. Dieser Kanal ist gegenüber der Saugöffnung zurückgesetzt. Damit ist das Ende des Kanals von der Saugöffnung beabstandet. Auf diese Weise ergibt sich eine gute Ausleuchtung des zu reinigenden Bereichs, auch wenn das Endstück mit der Saugöffnung auf die zu reinigende Fläche aufgesetzt wird. Auch im Übrigen ist eine gute Ausleuchtung des zu reinigenden Bereichs durch die Rücksetzung des Kanals in Bezug auf die Saugöffnung gegeben, da der von der Leuchteinrichtung erzeugte Lichtkegel bzw. Lichtstrahl sich hinreichend weit ausbreiten und entsprechend strahlen kann.

Bedarfsweise kann die Leuchteinrichtung bzw. LED-Beleuchtung über einen weiteren Schalter gesteuert werden. Die Leuchteinrichtung steigert zudem die Reinigungseffizienz, da sie beispielsweise in Nischen, Zwischenräumen und/oder am Fahrzeugboden den Schmutz und/oder die Partikel, die durch den Saugreinigungsvorsatz entfernbar sind, sichtbar macht, so dass ein Absaugen und/oder eine Aufwirbelung dieser Schmutzpartikel zielgerichtet durchgeführt werden kann.

Zudem kann das Material des Gehäuses, des Endstücks, des Gehäusestutzens, des Rohrstücks, des Schalters, des Führungskanals und/oder des Griffabschnitts einen, vorzugsweise thermoplastischen, Kunststoff, bevorzugt Polyethylen (PE), Polypropylen (PP), Polyvinylchlorid (PVC) und/oder Polystyrol (PS), aufweisen. Bevorzugt wird als Material Polyethylen verwendet, da dieses besonders schonend im Umgang mit den Polstern im Innenraum des Kraftfahrzeuges ist. Die meisten Kunststoffteile im Inneren des Fahrzeuges sind aus Acrylnitril-Butadien-Styrol (ABS) gefertigt und/oder weisen ABS als Material auf. Da PE weicher als ABS ist, werden Beschädigungen durch den Saugreinigungsvorsatz im Fahrzeuginnenraum zumindest im Wesentlichen vermieden. Polystyrol kann außerdem zur transparenten Ausbildung zumindest für den Gehäusestutzen vorgesehen sein.

Ferner kann am Griffabschnitt, insbesondere an dem dem Endstück abgewandten Anschlussende, ein, vorzugsweise bügelartiges, Leitungsbefestigungsmittel als Zugentlastung befestigt sein. Das Leitungsbefestigungsmittel kann zur Hindurchführung und/oder Befestigung der an den Stromanschluss und/oder Druckluftanschluss anzuschließenden Leitung(en) vorgesehen sein, insbesondere wobei die Leitung(en) mittels Kabelbinder und/oder geeigneter Befestigungsmittel an das Leitungsbefestigungsmittel fixierbar sind. Vorzugsweise kann demgemäß eine Beeinträchtigung beim Reinigungsbetrieb durch die Leitung(en) vermieden werden.

Der Saugreinigungsvorsatz ist insbesondere zum Einsetzen und zur Halterung in einen Köcher im Nicht-Gebrauchszustand vorgesehen. Letztlich kann der Saugreinigungsvorsatz aus dem Köcher zur Innenreinigung von Kraftfahrzeugen entnommen werden.

Der Nicht-Gebrauchszustand ist demgemäß vor und nach der Innenreinigung der Kraftfahrzeuge vorgesehen. Der Saugreinigungsvorsatz dient zum Absaugen von Schmutzpartikeln im Innenraum von Kraftfahrzeugen mittels einer Saugluftströmung.

Bei einer ganz besonders bevorzugten Ausführungsform ist erfindungsgemäß außenseitig am Gehäuse zwischen der Saugöffnung und dem Griffbereich ein als Stufe ausgebildeter Anschlag oder ein über den Griffbereich überstehender Anschlag zum Zusammenwirken mit dem äußeren Rand bzw. der Randkante des Köchers vorgesehen.

Bevorzugt schließt der, insbesondere umlaufende, Anschlag zumindest im Wesentlichen bündig mit dem äußeren Rand des Köchers ab. Vorzugsweise steht der Anschlag im im Köcher eingesetzten Zustand des Saugreinigungsvorsatzes über den äußeren Rand des Köchers über.

Als äußerer Rand des Köchers wird erfindungsgemäß im Folgenden auch der äußere Randbereich des Köchers - sowohl innen- als auch außenseitig - oder die äußere Randkante verstanden. Insbesondere kann der Anschlag des Saugreinigungsvorsatzes zumindest bereichsweise innerhalb des äußeren Randbereiches des Köchers im Nicht-Gebrauchszustand angeordnet sein.

Zum Beispiel kann der Köcher einen im äußeren Randbereich angeordneten inneren Anschlag zum, vorzugsweise bündigen, Abschluss mit dem Anschlag des Saugreinigungsvorsatzes aufweisen. Demzufolge kann der Anschlag des Saugreinigungsvorsatzes zumindest bereichsweise von dem äußeren Rand des Köchers im Nicht-Gebrauchszustand umgeben sein. Im Folgenden wird die vorgenannte Anordnung des Anschlags des Saugreinigungsvorsatzes innerhalb des äußeren Randbereichs auch als "bündiger Abschluss" zwischen dem Köcher und dem Anschlag des Saugreinigungsvorsatzes verstanden.

Der Köcher bildet eine Aufnahme für den Saugreinigungsvorsatz, wobei er eine Mantelfläche und eine end- bzw. stirnseitig geschlossene Unterseite aufweist. Die Köcheröffnung, in die der Saugreinigungsvorsatz hineingeführt werden kann, ist letztlich offen bzw. freiliegend ausgebildet und für den Nutzer ohne weiteres zugänglich. Insbesondere kann der Köcher eine hohlzylindrische Form aufweisen. Letztlich ist der Köcher an seiner Mantelfläche und an seiner geschlossenen Unterseite zumindest im Wesentlichen dicht ausgebildet, insbesondere wobei der Köcher keine weiteren Öffnungen neben der Köcheröffnung aufweist.

Erfindungsgemäß ermöglicht der Anschlag, dass ein zumindest im Wesentlichen druckdichter Abschluss zwischen dem Köcher und dem Saugreinigungsvorsatz im Nicht-Gebrauchszustand sichergestellt werden kann. Hierdurch wird eine Vielzahl von erfindungsgemäßen Vorteilen erreicht.

Durch den Anschlag wird auch eine Begrenzung der Einsteckbewegung des Saugreinigungsvorsatzes in den Köcher bereitgestellt. Ein Einführen in den Köcher über den Anschlag hinaus ist insbesondere nicht vorgesehen oder überhaupt möglich.

Der, vorzugsweise eindeutig erkennbare, Griffbereich ist insbesondere im Nicht-Gebrauchszustand und im eingesetzten Zustand im Köcher außerhalb des Köchers angeordnet.

Durch den Anschlag und den sich dadurch ergebenden definierten Griffbereich wird im Übrigen gewährleistet, dass der Saugreinigungsvorsatz vergleichsweise einfach aus dem Köcher entfernt werden kann. Da sich der Saugreinigungsvorsatz aufgrund des Anschlags nicht in den Köcher hineinziehen kann, kann der Benutzer den definierten Griffbereich ohne weiteres umgreifen und den Saugreinigungsvorsatz problemlos aus dem Köcher "ziehen". Nach Lösen des druckdichten Abschlusses lässt sich der Saugreinigungsvorsatz einfach und ohne großen Kraftaufwand bedienfreundlich aus dem Köcher entfernen.

Des Weiteren ist beim Zustandekommen der Erfindung erkannt worden, dass durch den zumindest im Wesentlichen druckdichten Abschluss zwischen dem Köcher und dem Saugreinigungsvorsatz die für die Gebläseeinrichtung benötige Energie deutlich, vorzugsweise um bis zu 20%, gesenkt werden kann. Letztlich kann durch den zumindest im Wesentlichen druckdichten Abschluss zwischen dem äußeren Rand des Köchers und dem Anschlag ein Unterdruck im Nicht-Gebrauchszustand vergleichsweise einfach - d. h. mit einem geringen Energieaufwand - gehalten werden. Ein zumindest im Wesentlichen in sich geschlossenes, den Unterdruck der Saugluftströmung aufweisendes, System wird demzufolge im Nicht-Gebrauchszustand erfindungsgemäß ermöglicht.

Zum Zusammenwirken mit dem äußeren Rand des Köchers ist es insbesondere erforderlich, dass sich der Anschlag an den äußeren Rand des Köchers anordnet, so dass ein zumindest im Wesentlichen druckdichter Abschluss zwischen dem Köcher und dem Saugreinigungsvorsatz entsteht. In diesem Zusammenhang sind grundsätzlich zwei Ausführungsformen denkbar. Erstens kann der Anschlag als Stufe ausgebildet sein, wobei die Stufe zwischen dem Griffbereich, der im Nicht-Gebrauchszustand (d.h. eingesetzter Zustand des Saugreinigungsvorsatzes in den Köcher) außerhalb des Köchers angeordnet ist, und dem vorderen, in den Köcher eingesetzten Bereich des Saugreinigungsvorsatzes angeordnet ist. Alternativ oder zusätzlich ist erfindungsgemäß zweitens vorgesehen, dass der Anschlag über den Griffbereich übersteht und somit letztlich als Vorsprung ausgebildet sein kann.

Bei einer besonders bevorzugten Ausführungsform ist vorgesehen, dass der Anschlag als umlaufender, insbesondere ringförmiger, Vorsprung ausgebildet ist. Der Anschlag grenzt unmittelbar an das Gehäuse an und/oder bildet einen Teil des Gehäuses. Vorzugsweise ist der Anschlag korrespondierend zur Form des äußeren Randes des Köchers ausgebildet, so dass sich eine bündige Auflage ergibt.

Darüber hinaus kann der Anschlag an dem der Saugöffnung zugewandten Anschlussende angeordnet sein. Insbesondere steht der Anschlag außenseitig über der Oberfläche des Anschlussendes über. Das Anschlussende kann eine zumindest im Wesentlichen hohlzylindrische Form aufweisen.

Bei einer weiteren besonders bevorzugten Ausführungsform der vorliegenden Erfindung grenzt der Anschlag unmittelbar an den Gehäusestutzen an. Vorzugsweise kann der an den Gehäusestutzen angrenzende Anschlag über den Griffbereich, insbesondere über das Anschlussende, überstehen. Der Anschlag kann dabei an dem Anschlussende und angrenzend zum Anschlussbereich für den Gehäusestutzen angeordnet sein. Die Dicke bzw. die Höhe des Anschlages kann insbesondere größer als die Materialstärke des Gehäusestutzens ausgebildet sein, so dass auch nach Anordnung des Gehäusestutzens auf den Anschlussbereich des Anschlussendes des Griffabschnitts der Anschlag über den Gehäusestutzen und über das Anschlussende übersteht. Letztlich kann der Anschlag derart ausgebildet sein, dass er bündig mit dem äußeren Rand des Köchers im Nicht-Gebrauchszustand abschließt.

Alternativ oder zusätzlich kann vorgesehen sein, dass der, vorzugsweise als Stufe ausgebildete, Anschlag außenseitig an dem Gehäusestutzen angeordnet ist. Dabei kann der Anschlag außenseitig auf dem Gehäusestutzen und angrenzend an das Anschlussende angeordnet sein. Die durch den Anschlag gebildete Stufe kann derart ausgebildet sein, dass der Anschlag eine Begrenzung der Einschubbewegung des Saugreinigungsvorsatzes in den Köcher bilden kann.

Erfindungsgemäß kann die Betriebssicherheit durch das Zusammenwirken des Anschlags und des äußeren Rand des Köchers erhöht werden, da eine vorgegebene und definierte Anordnung des Saugreinigungsvorsatzes in den Köcher über den Anschlag ermöglicht wird.

Vorteilhafterweise weist das Endstück an dem die Saugöffnung bildenden Saugende eine Schräge auf. Die Schräge kann insbesondere längs der zumindest im Wesentlichen rechteckförmigen Ausbildung der Saugöffnung angeordnet sein. Die Schräge ermöglicht eine verbesserte Anordnung des Endstücks mit der Saugöffnung auf den zu reinigenden Oberflächen. Hierdurch kann die Bedienfreundlichkeit bei der Benutzung zur Innenreinigung von Kraftfahrzeugen erleichtert werden.

Bei der Innenreinigung von Kraftfahrzeugen müssen häufig schwer zu erreichende Bereiche des Innenraums der Saugluftströmung zur Absaugung von Schmutzpartikeln ausgesetzt werden. Durch das endseitig schräg ausgebildete Endstück kann eine verbesserte Kontaktierung bzw. Erreichbarkeit schwer zugänglicher Bereiche sichergestellt werden.

Insbesondere kann die endseitige Schräge unter einem Winkel von 45° ± 15° verlaufen, wodurch schwer zu erreichende Bereiche des Innenraums von Kraftfahrzeugen vom Benutzer, ohne Einnahme einer Zwangshaltung eines Nutzers, erreicht werden können.

Bei einer weiteren Ausgestaltung der Erfindung ist vorgesehen, dass das Endstück außenseitig eine, insbesondere parallel zur Schräge verlaufende, Markierung als Verschleißanzeige aufweist. Die Markierung kann entweder in das Endstück eingeprägt und/oder oberseitig durch eine farbliche Hervorhebung auf dem Endstück angeordnet sein. Die Verschleißanzeige ist letztlich dafür vorgesehen, dem Nutzer anzuzeigen, wann ein Austausch des Endstücks erforderlich ist, insbesondere um eine Beschädigung des Gehäusestutzens zu vermeiden. In diesem Zusammenhang ist es vorteilhaft, wenn die Markierung im verbundenen Zustand des Endstücks mit dem Gehäusestutzen hinter dem Gehäusestutzen, der Saugöffnung zugewandt, angeordnet ist. Bei Überschreiten der Markierung würde letztlich auch ein Verschleiß des Gehäusestutzens vorliegen, der vorzugsweise vermieden werden soll.

Insbesondere ist die Markierung bei dem in den Gehäusestutzen eingesteckten Endstück beabstandet zum der Saugöffnung zugewandten äußeren Rand des Gehäusestutzens angeordnet.

Demzufolge kann durch das austauschbare Endstück eine verlängerte Nutzungsdauer des Saugreinigungsvorsatzes erreicht werden, insbesondere wobei bei Verschleiß lediglich das Endstück ausgetauscht werden muss. Gerade im Zusammenhang mit einer guten ökologischen Komptabilität sowie einer ressourcenschonenden Verwendung des Saugreinigungsvorsatzes zeigt sich eine derartige mehrteilige Ausbildung des Saugreinigungsvorsatzes als vorteilhaft.

Letztlich kann das Endstück als "Verschleißstück" ausgebildet sein, das vergleichsweise einfach austauschbar ist. Das Endstück ist dabei von seinen Abmaßen und seiner Ausgestaltung derart dimensioniert, dass es in Innenräumen von Kraftfahrzeugen sowohl eine möglichst große Saugfläche in kürzester Zeit als auch schwer zugängliche Bereiche des Innenraums erreichen und von Schmutzpartikeln zumindest im Wesentlichen befreien kann.

Gemäß einem weiteren Aspekt der vorliegenden Erfindung betrifft die Erfindung die Verwendung einer Reinigungsvorrichtung zur Innenreinigung von Kraftfahrzeugen, mit einem Saugreinigungsvorsatz der zuvor beschriebenen Art, mit einer Gebläseeinrichtung zur Erzeugung eines Unterdrucks und einer Drucklufteinrichtung, insbesondere einem Druckluftspeicher und/oder Drucklufterzeuger, wobei die Drucklufteinrichtung dem Druckluftkanal des Saugreinigungsvorsatzes zugeordnet ist und/oder wobei die Gebläseeinrichtung dem Saugkanal des Saugreinigungsvorsatzes zugeordnet ist.

Zur Vermeidung von unnötigen Wiederholungen sei auf die vorherigen Ausführungen zum erfindungsgemäßen Saugreinigungsvorsatz verwiesen, die in gleicher Weise auch für die erfindungsgemäße Reinigungsvorrichtung gelten. Letztlich versteht es sich, dass auch bevorzugte Ausführungsformen des Saugreinigungsvorsatzes sich auf die erfindungsgemäße Reinigungsvorrichtung anwenden lassen.

Die Gebläseeinrichtung kann über einen Saugschlauch mit dem Saugreinigungsvorsatz strömungsmäßig verbunden sein. Demgemäß kann der Saugschlauch über einen Saugadapter mit dem Saugreinigungsvorsatz, insbesondere dem Griffabschnitt, vorzugsweise am Anschlussende des Griffabschnitts, verbunden sein.

Der Gebläseeinrichtung kann eine Ausblaseinrichtung zugeordnet sein, die gereinigte Luft ausblasen kann. In der Ausblaseinrichtung können die durch den Saugstrom erfassten Schmutzpartikel aus der Luft abgeschieden werden.

Die Leuchteinrichtung des Saugreinigungsvorsatzes kann mit der Gebläseeinrichtung und/oder dem Schalter und/oder der Drucklufteinrichtung gekoppelt sein. So kann die Leuchteinrichtung in Abhängigkeit des Saugbetriebes, des Druckluftbetriebes und/oder der Schalterstellung gesteuert werden. Beispielsweise können die LEDs bzw. kann die Leuchteinrichtung während des Saug- und/oder Druckluftbetriebes leuchten.

Bei einer weiteren bevorzugten Ausführungsform ist eine den Saugreinigungsvorsatz mit der Drucklufteinrichtung verbindende Druckluftanschlussleitung und/oder wenigstens eine, insbesondere die Leuchteinrichtung mit einer Energiezufuhreinrichtung verbindende Anschlussleitung über wenigstens ein Befestigungsmittel mit dem Saugschlauch, insbesondere formschlüssig, verbunden. Vorzugsweise ist das Befestigungsmittel mit dem geriffelten Saugschlauch über eine, insbesondere lösbare, Rastverbindung verbunden. So kann das Befestigungsmittel mit wenigstens einem Rillenschenkel des Saugschlauches, insbesondere lösbar, formschlüssig und/oder verrastet, verbunden sein. Zudem kann das Befestigungsmittel mehrteilig und zur Aufnahme der Druckluftanschlussleitung und der elektrischen Anschlussleitung ausgebildet sein. Insbesondere weist das Befestigungsmittel zwei miteinander zu verrastende Seitenteile und einen mit den Seitenteilen formschlüssig zu verbindenden Aufsatz als Abdeckung auf, wobei der Aufsatz eine gerundete und/oder gekrümmte Außenseite sowie gerundete Kanten aufweisen kann. Durch die vorgenannte Ausbildung des abdeckenden Aufsatzes lassen sich etwaige Beschädigungen im Innenraum des Fahrzeugs bei der Handhabung sowie etwaige Verletzungen des Benutzers vermeiden.

Das Befestigungsmittel kann eine Aufnahme mit wenigstens einer, bevorzugt zwei drei, Aufnahmebereichen aufweisen, wobei in den Aufnahmebereichen die Druckanschlussleitung und, vorzugsweise, die wenigstens eine elektrische Anschlussleitung vorgesehen sind. Für die elektrische Anschlussleitung können zwei Aufnahmebereiche vorgesehen sein, so dass das Befestigungsmittel unabhängig von der Aufnahme der elektrischen Anschlussleitung an dem bzw. mit dem Saugschlauch verrastet werden kann.

Mit Hilfe des Befestigungsmittels können die Druckluftanschlussleitung und/oder die elektrische Anschlussleitung sicher an dem Saugschlauch fixiert werden und so wird gleichfalls bei Verwendung des Saugreinigungsvorsatzes eine unerwünschte Bewegung, beispielsweise ein Einklemmen im Kraftfahrzeuginnenraum, der Druckluftanschlussleitung und/oder der elektrischen Anschlussleitung vermieden. Insbesondere sind die Befestigungsmittel derart ausgebildet, dass der Biegeradius und/oder die Bewegungsfreiheit des Saugschlauchs nicht reduziert bzw. eingeschränkt wird.

Ferner kann die Reinigungsvorrichtung wenigstens einen Köcher zur Halterung des Saugreinigungsvorsatzes im Nicht-Gebrauchszustand - das heißt vor und nach der Innenreinigung von Kraftfahrzeugen - umfassen.

Der Köcher kann insbesondere hohlzylinderförmig ausgebildet sein. Der Köcher kann ferner endseitig geschlossen sein, wobei der bevorzugt vorgesehene Anschlag des Saugreinigungsvorsatzes derart mit dem äußeren Rand des Köchers zusammenwirkt, dass sich ein zumindest im Wesentlichen druckdichter Abschluss ergibt.

Durch den druckdichten Abschluss zwischen dem äußeren Rand des Köchers und dem Anschlag des Saugreinigungsvorsatzes wird ein zumindest im Wesentlichen in sich geschlossenes, vorzugsweise druckdichtes, System zwischen dem Saugreinigungsvorsatz und der Gebläseeinrichtung sichergestellt, wodurch der elektrische Energieverbrauch der Anlage verringert werden kann. Letztlich kann dem Saugreinigungsvorsatz wenigstens ein Drucksensor zugeordnet sein, der den vorhandenen Unterdruck misst und somit im Gebrauchszustand die über eine Energiezuführeinrichtung zugeführte elektrische Energie erhöht. Im Nicht-Gebrauchszustand wird insbesondere die benötige elektrische Energie für die Saugluftströmung des Saugreinigungsvorsatzes reduziert.

Im eingesetzten Zustand des Saugreinigungsvorsatzes grenzt der Anschlag unmittelbar an den Köcher an. Insbesondere steht der Anschlag über den äußeren Rand des Köchers über. Letztlich bildet darüber hinaus auch der Anschlag eine Begrenzung der Einschubbewegung des Saugreinigungsvorsatzes in den Köcher. Dabei kann der Anschlag umlaufend um das Gehäuse korrespondierend zum äußeren Rand des Köchers ausgebildet sein, so dass ein zumindest im Wesentlichen druckdichter Abschluss bei Vermeidung einer reibschlüssigen Klemmung zwischen dem Saugreinigungsvorsatz und dem Köcher ermöglicht wird.

Alternativ oder zusätzlich kann der Köcher im äußeren Randbereich einen inneren Anschlag zum bündigen Abschluss mit dem Anschlag des Saugreinigungsvorsatzes aufweisen, insbesondere wobei der Anschlag des Saugreinigungsvorsatzes zumindest bereichsweise von dem äußeren Rand des Köchers umgeben und/oder innerhalb des äußeren Randbereichs des Köchers angeordnet sein kann. Hierbei kann als äußerer Rand des Köchers auch der äußere Randbereich und somit auch ein innerer Anschlag im äußeren Randbereich des Köchers erfindungsgemäß verstanden werden. Als "äußerer Rand" des Köchers muss nicht zwingend der "äußerste, oberste Rand" des Köchers angesehen werden.

Insbesondere kann der Köcher im äußeren Randbereich eine umlaufende Stufe bzw. einen umlaufenden inneren Anschlag zum bündigen Abschluss mit dem Anschlag des Saugreinigungsvorsatzes im Nicht-Gebrauchszustand aufweisen.

Weiterhin ist bei einer besonders bevorzugten Ausführungsform vorgesehen, dass die Gebläseeinrichtung eine Steuereinrichtung aufweist, die die der Gebläseeinrichtung zugeführte elektrische Energie zur Erzeugung des Unterdrucks während des in den Köcher eingesetzten Zustands des Saugreinigungsvorsatzes verringert.

Der Steuereinrichtung kann wenigstens ein Drucksensor zugeordnet sein, der den benötigen Unterdruck bestimmt, der wiederum zur Regelung und/oder Steuerung des Drucks verwendet werden kann. Es versteht sich, dass durch einen zumindest im Wesentlichen druckdichten Abschluss zwischen dem Anschlag und dem Köcher weniger elektrische Energie benötigt wird, da die zu überbrückende Druckdifferenz im Vergleich zum Gebrauchszustand während der Innenreinigung von Kraftfahrzeugen deutlich reduziert werden kann.

Vorzugsweise kann mit einer Gebläseeinrichtung eine Vielzahl von Saugreinigungsvorsätzen, bevorzugt wenigstens zwei, verbunden sein. Es versteht sich, dass letztlich auch die der Gebläseeinrichtung zugeführte elektrische Energie verringert werden kann, sobald wenigstens ein Saugreinigungsvorsatz in einem Köcher angeordnet ist. Erfindungsgemäß kann ein kontinuierlicher Saugbetrieb vorgesehen sein, so dass ein druckdichter Abschluss zwischen Köcher und Anschlag vorteilhaft hinsichtlich der Energie- und/oder Betriebskosten ist.

Im Übrigen betrifft die vorliegende Erfindung gemäß einem weiteren Aspekt ein Verfahren zur Innenreinigung von Kraftfahrzeugen, mit einer Reinigungsvorrichtung der vorgenannten Art, wobei zur Innenreinigung im Saugbetrieb Schmutz und/oder Partikel abgesaugt werden und wobei während des Saugbetriebes im Druckluftbetrieb mittels einer Druckluftströmung Schmutz und/oder Partikel aufwirbelbar sind.

Zur Vermeidung von unnötigen Wiederholungen sei auf die Ausführungen zu dem erfindungsgemäßen Saugreinigungsvorsatz und der erfindungsgemäßen Reinigungsvorrichtung verwiesen, die sich in gleicher Weise auch für das erfindungsgemäße Verfahren zur Innenreinigung von Kraftfahrzeugen anwenden lassen. Letztlich versteht es sich, dass bevorzugte Ausführungsformen der Reinigungsvorrichtung und des Saugreinigungsvorsatzes ebenfalls erfindungsgemäß für das erfindungsgemäße Verfahren anwendbar sind.

Der Vorteil der Erfindung besteht unter anderem letztlich darin, dass ohne Weiteres schwer erreichbare Bereiche gereinigt werden können, da die in diesen Bereichen abgesetzten Schmutzpartikel in besser zugängliche Bereiche geblasen und anschließend durch die Saugluftströmung aufgesaugt bzw. abgesaugt werden können.

Erfindungsgemäß ist vorgesehen, dass der Druckluftbetrieb über den Schalter zuschaltbar ist. So kann im Rahmen des erfindungsgemäßen Verfahrens während des Saugbetriebes der Druckluftbetrieb - in Abhängigkeit des zu reinigenden Bereiches des Fahrzeuginnenraums - sowohl ein- als auch ausschaltbar sein. Letztlich kann der Druckluftbetrieb bzw. die Druckluftströmung dann verwendet werden, wenn dies aus reinigungstechnischen Gesichtspunkten erforderlich wird.

Ein Zuschalten der Druckluftströmung erfolgt erfindungsgemäß durch die Betätigung des Schalters. Im Hinblick auf die erfindungsgemäße Betätigung des Schalters darf zur Vermeidung von unnötigen Wiederholungen auf die vorstehenden Ausführungen verwiesen werden.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Seitenansicht auf eine erfindungsgemäße Reinigungsvorrichtung,
- Fig. 2: eine schematische perspektivische Darstellung eines erfindungsgemäßen Saugreinigungsvorsatzes,
- Fig. 3: eine schematische Seitenansicht des in Fig. 2 dargestellten Saugreinigungsvorsatzes,
- Fig. 4: eine schematische Querschnittsansicht des in Fig. 2 und 3 dargestellten Saugreinigungsvorsatzes,
- Fig. 5: eine Explosionsansicht des in Fig. 2 bis Fig. 4 dargestellten Saugreinigungsvorsatzes,
- Fig. 6: eine weitere schematische perspektive Darstellung des in Fig. 2 bis Fig. 4 dargestellten Saugreinigungsvorsatzes,
- Fig. 7: eine schematische perspektive Darstellung von Teilen einer erfindungsgemäßen Reinigungsvorrichtung,
- Fig. 8: eine schematische perspektive Darstellung eines erfindungsgemäßen Befestigungsmittels,
- Fig. 9: eine weitere schematische perspektive Darstellung des in Fig. 8 dargestellten Befestigungsmittels,
- Fig. 10: eine Explosionsansicht des in Fig. 7 bis Fig. 9 dargestellten Befestigungsmittels,
- Fig. 11: eine schematische Querschnittsansicht des in Fig. 7 bis Fig. 9 dargestellten Befestigungsmittels,
- Fig. 12: eine schematische Querschnittsansicht des in Fig. 7 dargestellten Befestigungsmittels und des Saugschlauches,
- Fig. 13: eine schematische Unteransicht des in Fig. 2 dargestellten Saugreinigungsvorsatzes,
- Fig. 14: eine schematische Unteransicht mit einem Querschnitt des Schalters des in Fig. 2 dargestellten Saugreinigungsvorsatzes,
- Fig. 15: eine schematische Seitenansicht mit einem Querschnitt des Schalters des in Fig. 2 dargestellten Saugreinigungsvorsatzes,
- Fig. 16: eine schematische perspektivische Ansicht von Teilen des in Fig. 2 dargestellten Saugreinigungsvorsatzes,
- Fig. 17: eine schematische Unteransicht von Teilen des in Fig. 2 dargestellten Saugreinigungsvorsatzes,
- Fig. 18: eine schematische Vorderansicht des in Fig. 2 dargestellten Saugreinigungsvorsatzes,
- Fig. 19: eine schematische Querschnittsansicht des in Fig. 18 dargestellten Saugreinigungsvorsatzes,
- Fig. 20: eine schematische perspektivische Ansicht des Führungskanals und der Sperre des in Fig. 2 dargestellten Saugreinigungsvorsatzes,
- Fig. 21: eine weitere schematische perspektivische Ansicht des Führungskanals und der Sperre des in Fig. 2 dargestellten Saugreinigungsvorsatzes,
- Fig. 22: eine schematische Draufsicht auf einen erfindungsgemäßen Schalter in der Freigabestellung,
- Fig. 23: eine schematische Querschnittsansicht des in Fig. 22 dargestellten Schalters,
- Fig. 24: eine weitere schematische Querschnittsansicht des in Fig. 22 dargestellten Schalters,
- Fig. 25: eine schematische Draufsicht auf einen erfindungsgemäßen Schalter in der Sperrstellung,
- Fig. 26: eine schematische Querschnittsansicht des in Fig. 25 dargestellten Schalters,
- Fig. 27: eine weitere schematische Querschnittsansicht des in Fig. 25 dargestellten Schalters,
- Fig. 28A: eine schematische perspektivische Darstellung des erfindungsgemäßen Köchers,
- Fig. 28B: eine schematische perspektivische Darstellung einer weiteren Ausführungsform des erfindungsgemäßen Köchers,
- Fig. 29: eine schematische Seitenansicht einer weiteren Ausführungsform des in den Köcher eingesetzten erfindungsgemäßen Saugreinigungsvorsatzes,
- Fig. 30: eine schematische perspektivische Darstellung einer weiteren Ausführungsform der erfindungsgemäßen Reinigungsvorrichtung,
- Fig. 31: eine schematische Darstellung einer weiteren Ausführungsform der erfindungsgemäßen Reinigungsvorrichtung,
- Fig. 32: eine schematische perspektivische Darstellung eines Abschnitts des erfindungsgemäßen Saugreinigungsvorsatzes,
- Fig. 33: eine schematische perspektivische Darstellung eines weiteren Abschnitts des erfindungsgemäßen Saugreinigungsvorsatzes und
- Fig. 34: eine schematische Querschnittsdarstellung des in einem Köcher eingesetzten erfindungsgemäßen Saugreinigungsvorsatzes.

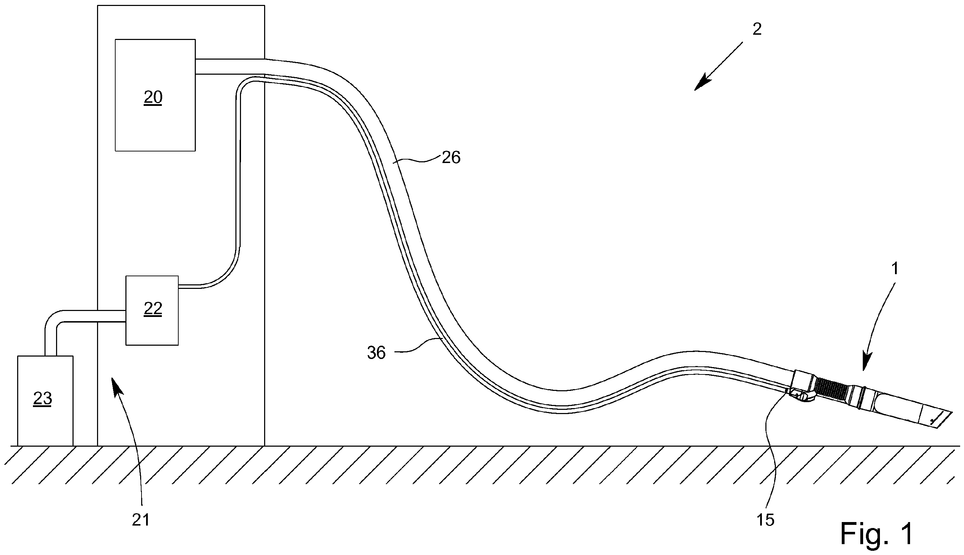

Die Fig. 1 zeigt einen Saugreinigungsvorsatz 1 einer Reinigungsvorrichtung 2, die zur Innenreinigung von nicht dargestellten Kraftfahrzeugen verwendet wird. Zur Innenreinigung wird eine Saugluftströmung, die endseitig am Saugreinigungsvorsatz 1 anliegt, verwendet.

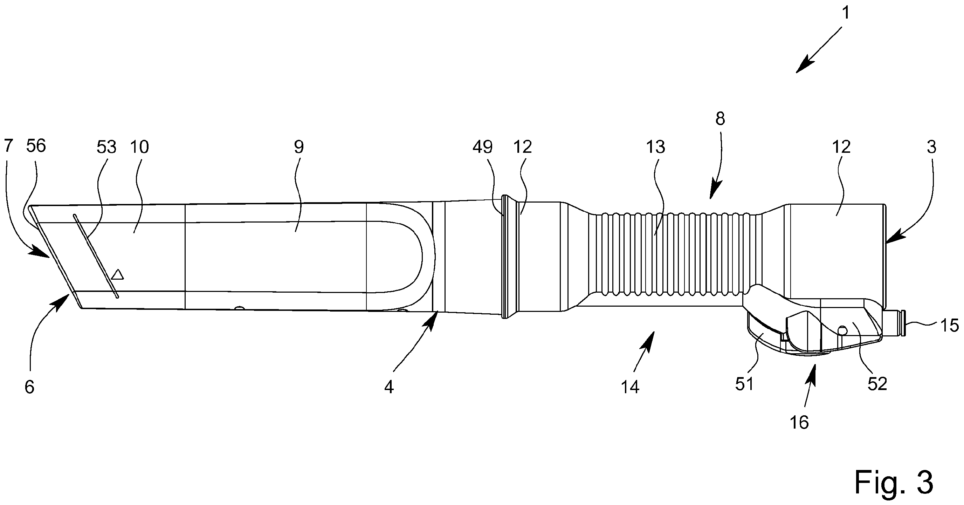

Fig. 3 zeigt einen Saugkanal 3 des Saugreinigungsvorsatzes 1 zum Führen der Saugluftströmung. Weiterhin ist in Fig. 3 das Gehäuse 4 des Saugreinigungsvorsatzes 1 gezeigt, das den Saugkanal 3 aufweist. In dem Gehäuse 4 ist zusätzlich zum Saugkanal 3 ein Druckluftkanal 5 zum Führen einer Druckluftströmung angeordnet. In einem weiteren, nicht dargestellten Ausführungsbeispiel kann dem Gehäuse 4 zusätzlich zum Saugkanal 3 ein Druckluftkanal 5 zum Führen einer Druckluftströmung zugeordnet sein, das heißt insbesondere fest mit dem Gehäuse 4 verbunden sein, jedoch nicht innerhalb des Gehäuses 4 angeordnet bzw. vorgesehen sein.

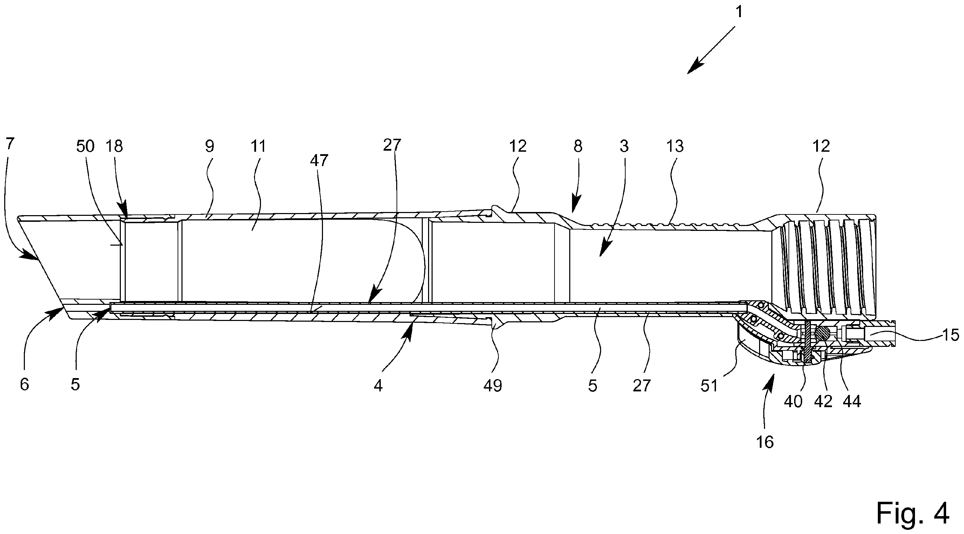

Anhand von Fig. 4 ist ersichtlich, dass ein strahlförmiger Austritt der Druckluftströmung aus dem Druckluftkanal 5 über die Druckluftöffnung 6 vorgesehen ist. Der Druckluftkegel ist nur geringfügig aufgefächert. Die Druckluft dient zum Ausblasen von Schmutzpartikeln aus schwer zugänglichen Bereichen. Weiterhin zeigt Fig. 4, dass der Saugkanal 3 unabhängig von dem Druckluftkanal 5 ausgebildet ist.

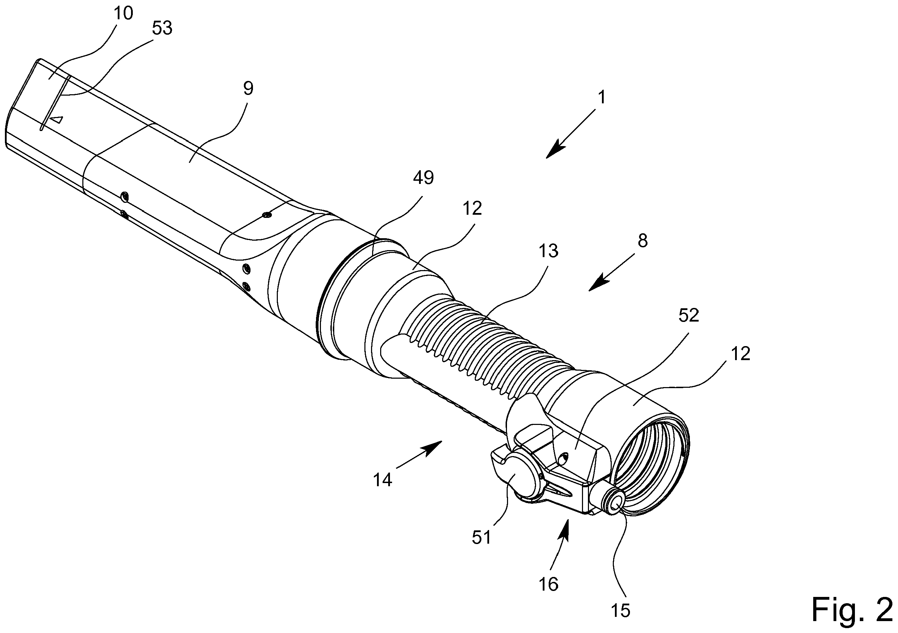

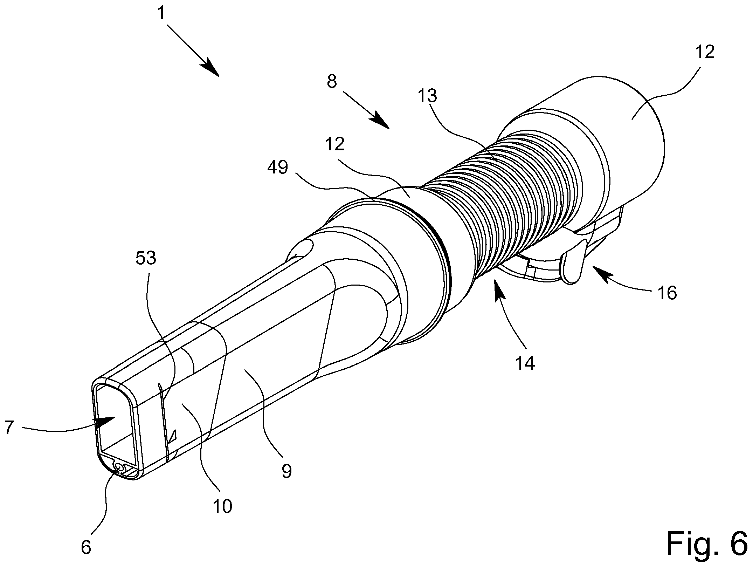

Der in den Fig. 2 und 6 schematisch perspektivisch dargestellte Saugreinigungsvorsatz 1 weist einen Griffbereich 14 auf, der zum Greifen des Saugreinigungsvorsatzes 1 mit einer Hand vorgesehen ist. Dabei ist der Griffbereich 14 derart ausgebildet, dass der Saugreinigungsvorsatz 1 durch eine den Griffbereich 14 umfassende Hand des Nutzers gehalten bzw. geführt werden kann. Insbesondere werden nicht beide Hände des Nutzers zum Halten und zur Führung des Saugreinigungsvorsatzes 1 benötigt. Die Hand muss dabei nicht vollständig umfangsmäßig den Griffbereich 14 des Saugreinigungsvorsatzes 1 umgreifen. Auch ein abschnittsweises bzw. bereichsweises Umgreifen des Saugreinigungsvorsatzes 1 ist zur sicheren Führung des Saugreinigungsvorsatzes 1 ausreichend.

Dementsprechend liegt der Außendurchmesser des Griffbereichs 14, insbesondere des Griffabschnittsbereich 13, zwischen 4 cm bis 15 cm, bevorzugt zwischen 6 cm bis 10 cm, insbesondere zumindest im Wesentlichen bei 7 cm.

Fig. 2 zeigt, dass ein Schalter 16 zur Steuerung der Druckluftströmung vorgesehen ist. Der Schalter 16 ist derart am Griffbereich 14 angeordnet, dass der Schalter 16 durch eine den Griffbereich 14 umfassende Hand mit derselben Hand betätigbar ist.

Der in Fig. 2 dargestellte Schalter 16 ist ferner derart angeordnet und ausgebildet, dass er insbesondere lediglich durch einen Finger, vorzugsweise den kleinen Finger oder den Daumen, der den Griffbereich 14 umfassenden Hand des Nutzers betätigbar ist. Die Druckluftströmung kann demgemäß beim Saugbetrieb während der Reinigung von Kraftfahrzeugen einfach zugeschaltet werden.

Der in den Ausführungsbeispielen dargestellte Schalter 16 weist einen Schwenkhebel 51 auf, der in unterschiedliche Positionen zur Steuerung bzw. Freigabe der Druckluftströmung verschwenkt werden kann. Der Schwenkhebel 51 ist an seinem einen Ende schwenkbar gelagert, wobei dessen anderes, freies Ende zur Schalterbetätigung ausgebildet ist, insbesondere einen Betätigungsabschnitt aufweist.

Nicht dargestellt ist, dass der Schalter 16 auch als Druckknopfschalter und/oder Schaltstößel ausgebildet sein kann. Letztlich ist der Schalter 16 in weiteren Ausführungsformen derart ausgebildet, dass er zum einen an den Griffbereich 14 angrenzend bzw. im Griffbereich 14 angeordnet ist und durch die den Griffbereich 14 umfassende Hand des Nutzers betätigt werden kann.

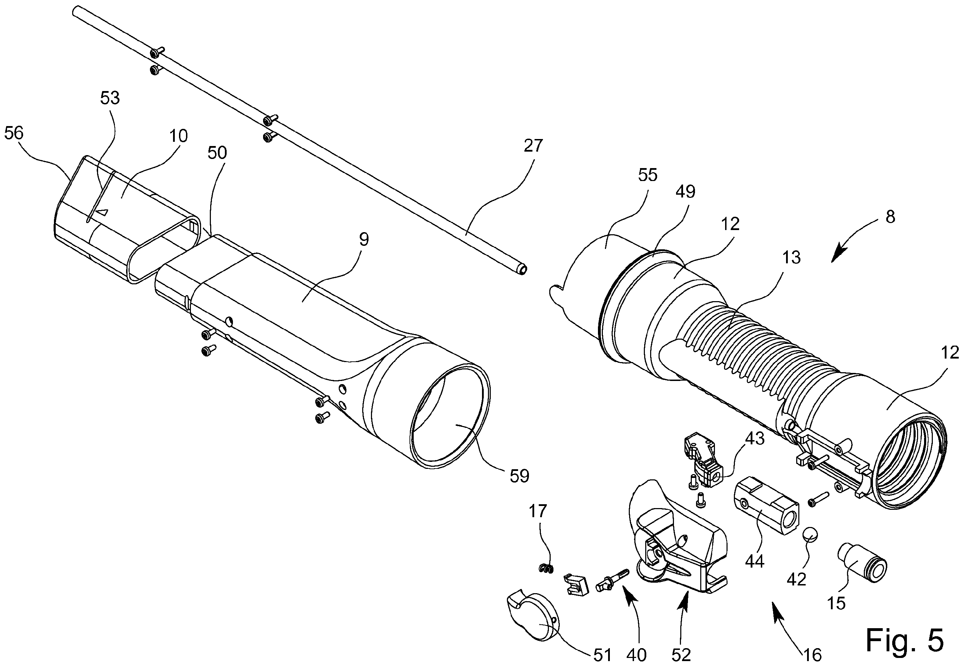

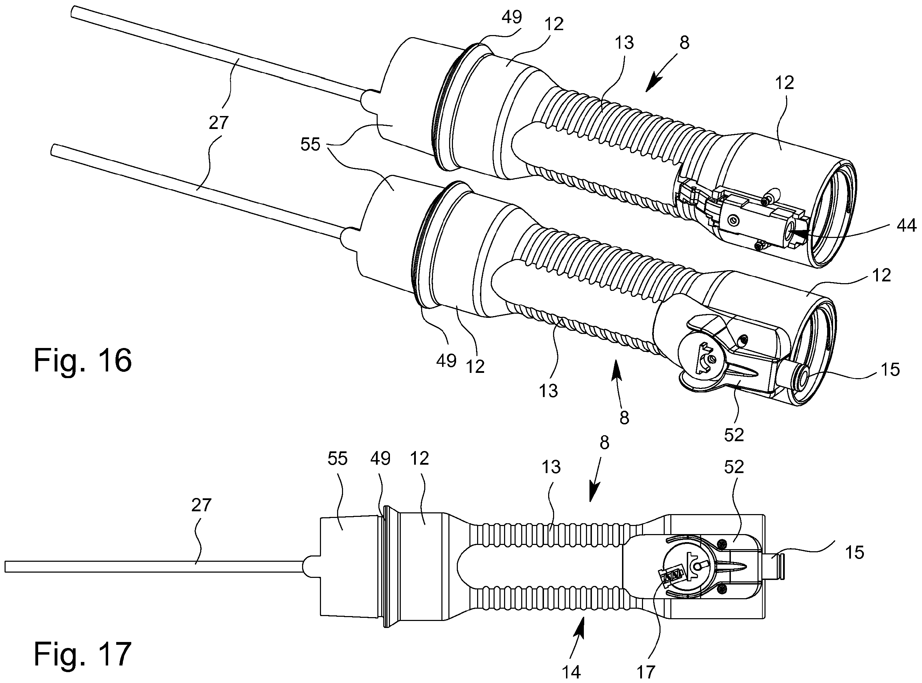

In Fig. 17 ist dargestellt, dass der Schwenkhebel 51 durch wenigstens eine Feder 17 ferbelastet ist. Die Feder 17 ist ebenfalls in der Explosionsansicht des Saugreinigungsvorsatzes 1 in Fig. 5 dargestellt.

Der Schalter 16 kann als äußeres Gehäuse den Schwenkhebel 51 und ein Schaltergehäuse 52 aufweisen, wie dies beispielsweise in den Fig. 2 und 3 gezeigt ist. Das Schaltergehäuse 52 kann feststehend bzw. nicht verschwenkbar an dem Gehäuse 4 des Saugreinigungsvorsatzes 1, insbesondere zumindest bereichsweise angrenzend an den Griffbereich 14, angeordnet sein. In den dargestellten Ausführungsbeispielen ist oberseitig auf dem Schaltergehäuse 52 der Schwenkhebel 51 angeordnet und letztlich als verschwenkbarer Hebel ausgebildet. Der Schwenkhebel 51 reicht in den Griffbereich 14 hinein und kann durch eine den Griffbereich 14 umfassende Hand betätigt, insbesondere verschwenkt, werden. In dem Gehäuse des Schalters 16 können ferner die weiteren Komponenten des Schalters 16 angeordnet sein, die zur Freigabe oder Sperrung der Druckluftströmung zusammenwirken.

An dem Schaltergehäuse 52 kann der Druckluftanschluss 15, wie aus Fig. 2 ersichtlich ist, angeordnet sein. Über den Druckluftanschluss 15 kann dem Saugreinigungsvorsatz 1 die Druckluftströmung zugeführt werden, wobei die Druckluftströmung in den dargestellten Ausführungsbeispielen bei Verwendung des Saugreinigungsvorsatzes 1 stets an dem Druckluftanschluss 15 anliegt und letztlich über den Schalter 16 in den Druckluftkanal 5 überführt werden kann.

In den dargestellten Ausführungsformen ist das Schaltergehäuse 52 derart an dem Gehäuse 4 des Saugreinigungsvorsatzes 1 angeordnet, dass es sich der Form des Gehäuses 4 anpasst bzw. anschmiegt. Hierdurch kann ein Schalter 16 mit einer möglichst geringen Aufbauhöhe von wenigen Zentimetern, insbesondere von 1 cm bis 3 cm, realisiert werden.

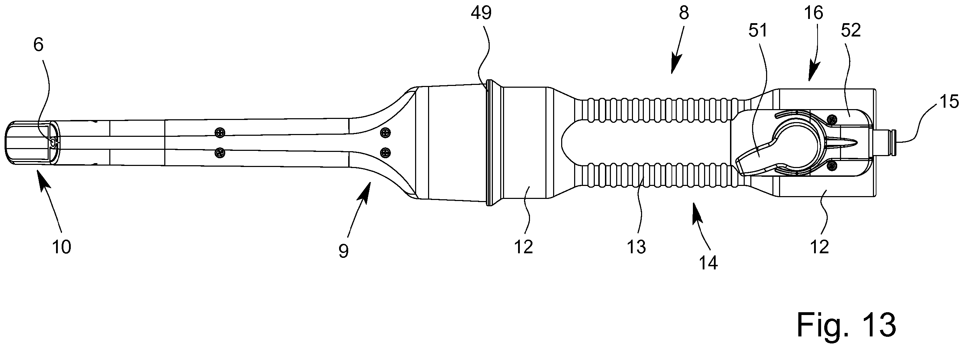

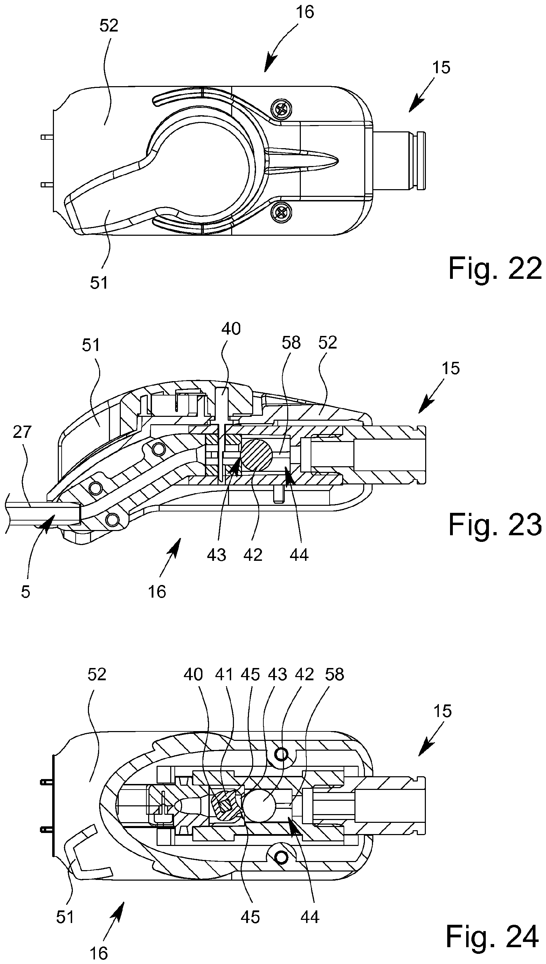

In den dargestellten Ausführungsbeispielen ist der Schwenkhebel 51 von wenigstens einer die Druckluftströmung sperrende Sperrstellung, die in den Fig. 2 bis 4 dargestellt ist, in wenigstens eine die Druckluftströmung freigebende Freigabestellung, die in den Fig. 13 und 22 gezeigt ist, verschwenkbar bzw. verlagerbar.

Die Überführung des Schwenkhebels 51 in die Freigabestellung ausgehend von der Sperrstellung kann durch eine auf den Schwenkhebel 51 entgegen der Federkraft der Feder 17 ausgeübte Verstellkraft durch wenigstens einen Finger der den Griffbereich 14 zumindest bereichsweise umfassenden Hand eines Nutzers durchgeführt werden.

Der Schwenkhebel 51 kann von der Freigabestellung in die Sperrstellung durch die Federkraft der Feder 17 verschwenkbar und/oder verlagerbar sein. Um ausgehend von der Sperrstellung in die Freigabestellung zu gelangen, muss letztlich eine Kraft auf den Schwenkhebel 51 ausgeübt werden. Allerdings kann aufgrund der Federkraft der Feder 17 der Schwenkhebel 51 von der Freigabestellung in die Sperrstellung ohne äußere Krafteinwirkung "selbstständig" zurückgeführt werden.

Um den Schwenkhebel 51 in der in Fig. 22 dargestellten Freigabestellung zu fixieren, ist vorgesehen, dass eine manuelle Kraft auf den Schwenkhebel 51 ausgeübt wird, die die Federkraft der Feder 17 übersteigt. Der Schwenkhebel 51 wird also in der Freigabestellung nicht ohne äußere Krafteinwirkung gehalten. Dies dient letztlich dazu, dass die Druckluftströmung nicht unbeabsichtigt während des Saugbetriebes zugeschaltet wird, sondern - letztlich nur bei Notwendigkeit.

Fig. 16 zeigt den Schalter 16 ohne den Schwenkhebel 51 in einer ersten Darstellung, in der Schaltergehäuse 52 gut erkennbar ist, und in einer zweiten Darstellung, die den Schalter 16 ohne den Druckluftanschluss 15, ohne Schwenkhebel 51 und ohne das Schaltergehäuse 52 zeigt.

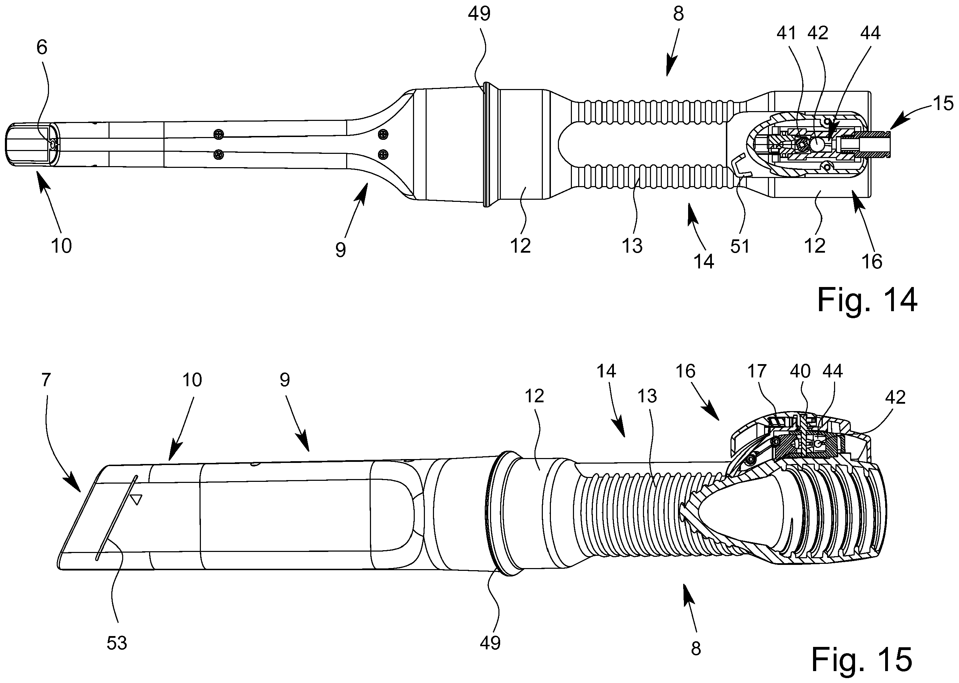

In den Fig. 13 und 14 ist der Schalter 16 in der Freigabestellung dargestellt. Fig. 14 zeigt eine Querschnittsdarstellung des Schalters 16 an der Unterseite des Saugreinigungsvorsatzes 1. Die Fig. 22 bis 24 korrespondieren zu den Fig. 13 und 14, wobei die Fig. 22 bis 24 den Schalter 16 im Detail zeigen. Dabei korrespondiert die Fig. 22 zur Fig. 13 und die Fig. 24 zur Fig. 14.

Aus den Fig. 13 und 14 sowie 22 bis 24 geht hervor, dass die Feder 17 zumindest mittelbar mit einem Betätigungsmittel 40 derart verbunden ist, dass das Betätigungsmittel 40 zur Rotation eines Auslösemittels 41 bei Verschenkung und/oder Verlagerung des Schwenkhebels 51 von der Sperrstellung in die Freigabestellung ausgebildet ist.

Letztlich wird die Feder 17 durch Verschwenkung des Schwenkhebels 51 gespannt, wobei dies in der Fig. 17 dargestellt ist. In dieser Position führt die Federkraft der Feder 17 zur Rotation des zumindest im Wesentlichen stabförmigen bzw. stößelförmigen Betätigungsmittel 40.

Das Betätigungsmittel 40 wirkt derart mit dem Auslösemittel 41 zusammen, dass das Betätigungsmittel 40 zur Rotation des Auslösemittels 41 führen kann. Das Auslösemittel 41 ist bevorzugt als Exzenterscheibe ausgebildet. Insbesondere kann das Betätigungsmittel 40 in das Auslösemittel 41 eingreifen bzw. durch das Auslösemittel 41 hindurchgeführt sein. Das Betätigungsmittel 40 weist zumindest bereichsweise eine zumindest im Wesentlichen rechteckförmige Querschnittsform, wie dies aus Fig. 24 ersichtlich ist, auf, und zwar in dem Abschnitt, der an das Auslösemittel 41 anliegt. Das Auslösemittel 41 weist eine zu dem Betätigungsmittel 40 korrespondierende Aufnahmeöffnung auf, die ebenfalls einen zumindest im Wesentlichen rechteckförmigen Querschnitt hat, so dass bei Drehung des Betätigungsmittels 40 sich das Auslösemittel 41 ebenfalls dreht.

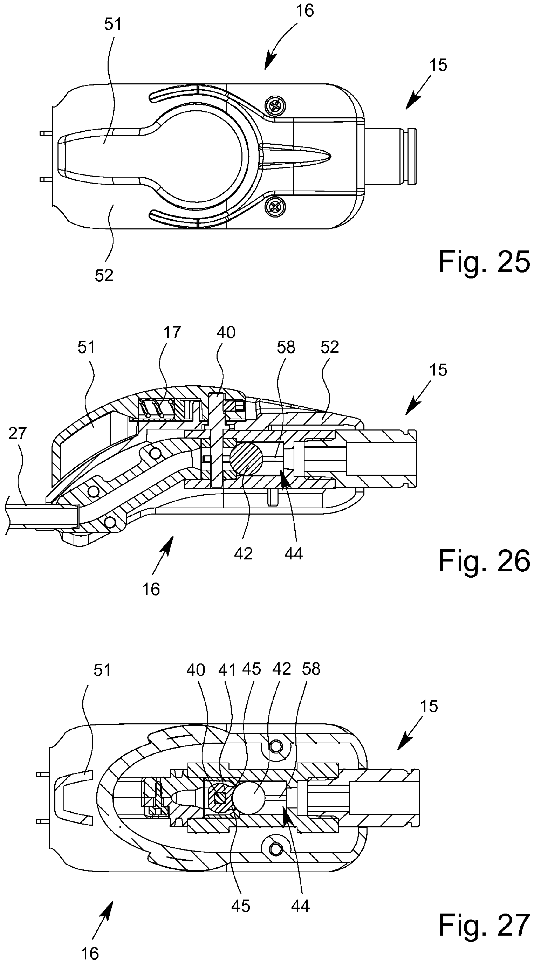

Natürlich führt das Betätigungsmittel 40 auch bei Verschwenkung und/oder Verlagerung des Schwenkhebels von der Freigabestellung in die Sperrstellung zur Rotation des Auslösemittels 41. Die Sperrstellung und das Zusammenwirken zwischen dem Betätigungsmittel 40 und dem Auslösemittel 41 geht dabei aus den Fig. 26 und 27 sowie der Fig. 15 hervor. Die Fig. 26 ist letztlich eine Detaildarstellung des in Fig. 15 gezeigten Schalters 16.

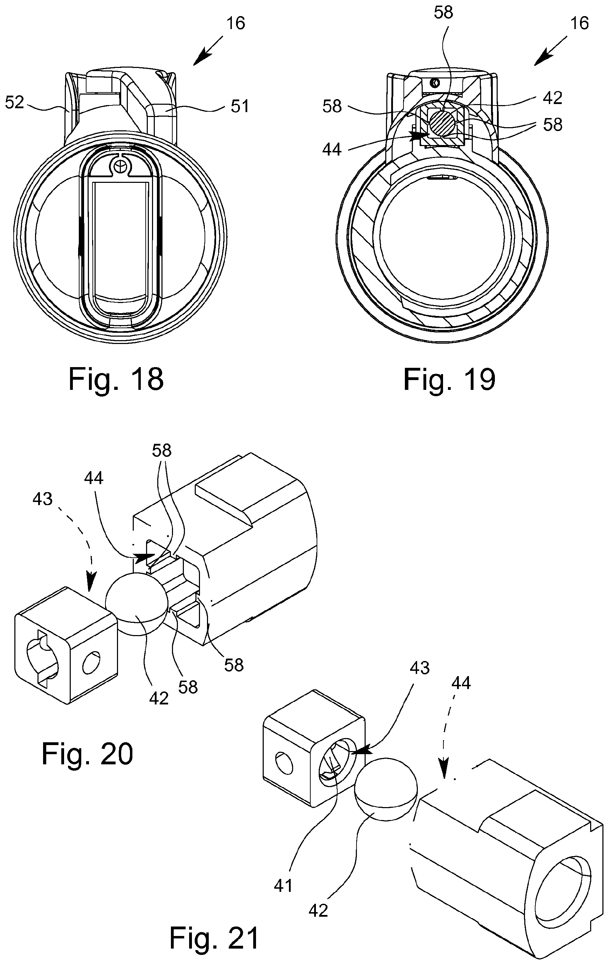

Die Fig. 23 und 24 sowie 26 und 27 zeigen, dass das Auslösemittel 41 mit einer Sperre 42 zusammenwirkt. In den dargestellten Ausführungsformen ist die Sperre 42 zumindest im Wesentlichen kugelförmig ausgebildet, wie u. a. die Fig. 20 zeigt.

Die Sperre 42 ist verschieblich in einem eine Kanalöffnung 43 aufweisenden Führungskanal 44 gelagert. Der Führungskanal 44 ist in den Fig. 20 und 21 dargestellt. Die Kanalöffnung 43 ist in Fig. 21 ersichtlich.

Die Druckluft wird durch den Führungskanal 44 geführt und über den Druckluftanschluss 15 zur Verfügung gestellt. Die in dem Führungskanal 44 anliegende Druckluft ist in der Sperrstellung des Schalters 16 durch die die Kanalöffnung 43 verschließende Sperre 42 gesperrt. Eine die Kanalöffnung 43 verschließende Sperre 42 ist in den Fig. 26 und 27 dargestellt.

Die Fig. 23 und 24 zeigen, dass in der Freigabestellung des Schalters 16 bzw. des Schwenkhebels 51 die Sperre 42 durch das Auslösemittel 41 derart verschoben worden ist, dass die anstehende Druckluft durch die Kanalöffnung 43 des Führungskanals 44 in den Druckluftkanal 5 führbar ist bzw. strömen kann.

Letztlich kann die Sperre 42 in dem Führungskanal 44 verschoben werden, wobei sie in der Sperrstellung des Schalters 16 bzw. des Schwenkhebels 51 derart mit dem Auslösemittel 41 abschließt bzw. sich an dieses anschmiegt, dass die Kanalöffnung 43 gesperrt bzw. verschlossen ist.

Dabei kann die Kanalöffnung 43 eine zu der Form der Sperre 42 korrespondierende Form bzw. Querschnitt aufweisen, insbesondere einen zumindest im Wesentlichen kreisförmigen bzw. runden Querschnitt haben.

Der Führungskanal 44 kann derart ausgebildet sein, dass die Sperre 42 entlang der Innenwand des Führungskanals 44 geführt werden kann. Fig. 20 zeigt, dass in dem Führungskanal 44 Stege 58 vorgesehen sind, längs derer die Sperre 42 geführt werden kann. Es sind wenigstens vier Stege 58 in dem dargestellten Ausführungsbeispiel vorgesehen. Letztlich kann in weiteren, nicht dargestellten Ausführungsformen auch wenigstens ein Steg 58 vorgesehen sein.

Die Stege 58 sind derart ausgebildet, dass in der Freigabestellung des Schalters 16 bzw. des Schwenkhebels 51 die Druckluft von dem Führungskanal 44 über die Kanalöffnung 43 in den Druckluftkanal 5 überführt werden bzw. strömen kann. Dabei kann die Druckluft letztlich neben den Stegen 58 an der Sperre 42 vorbeiströmen. Die Stege 58 dienen demzufolge unter anderem zur Anlage sowie zur Fixierung und zur Verschiebung der Sperre 42 in dem Führungskanal 44. Weiterhin werden durch die Stege 58 Bereiche gebildet, durch die die Druckluft an der Sperre 42 vorbeiströmen kann, wobei diese Bereich in der Freigabestellung des Schalters 16 bzw. des Schwenkhebels 51 geschaffen und genutzt werden.

In Fig. 19 ist eine Querschnittsansicht des in Fig. 18 gezeigten Saugreinigungsvorsatzes 1 in der Freigabestellung des Schalters 16 bzw. des Schwenkhebels 51 gezeigt. Fig. 19 verdeutlicht, dass die Sperre 42 an den Stegen 58 des Führungskanals 44 auf- bzw. anliegt und die Druckluft zwischen den sich zwischen den Stegen 58 ergebenden Bereichen vorbeiströmen kann.

Die Stege 58 können insbesondere als Vorsprünge ausgebildet sein, die über die Seitenwände bzw. die Grundflächen der Seitenwände des Führungskanals 44 überstehen. Insbesondere weist der Führungskanal 44 einen zumindest im Wesentlichen rechteckförmigen Querschnitt auf, wie dies Fig. 19 zeigt.

Fig. 24 zeigt, dass das Auslösemittel 41 wenigstens einen Vorsprung 45, im dargestellten Ausführungsbeispiel zwei Vorsprünge 45, aufweist, wobei die Vorsprünge 45 derart ausgebildet sind, dass die Sperre 42 zur Öffnung der Kanalöffnung 43 des Führungskanals 44 verschiebbar ist. In dem dargestellten Ausführungsbeispiel wird die Sperre 42 entlang wenigstens eines Steges 58 verschoben. Dabei greift der Vorsprung 45 an die Oberfläche bzw. die Mantelfläche der Sperre 42 an.

In der Sperrstellung des Schalters 16 bzw. des Schwenkhebels 51 sind die Vorsprünge 45 des Auslösemittels 41 derart angrenzend an die Sperre 42 angeordnet, dass die Kanalöffnung 43 verschlossen wird, wie dies aus Fig. 27 ersichtlich ist.

Der in den Ausführungsformen dargestellte Schalter 16 ist über den Schwenkhebel 51 in zwei entgegengesetzte Richtungen in jeweils eine Freigabestellung ausgehend von der Sperrstellung verschwenkbar und/oder verlagerbar. In diesem Zusammenhang zeigen sich die vorgenannten Vorsprünge 45 als besonders vorteilhaft, da durch zwei Vorsprünge 45 letztlich gewährleistet werden kann, dass ausgehend von einer zumindest im Wesentlichen mittigen Sperrstellung des Schalters 16 bzw. des Schwenkhebels 51 der Schwenkhebel 51 in die Freigabestellung überführt werden kann, und zwar in zwei unterschiedliche Richtungen. Wäre nur ein Vorsprung 45 des Auslösemittels 41 vorhanden, so könnte der Schwenkhebel 51 auch nur in eine Richtung verschwenkt werden.

Die Druckluftleitung 27 des Druckluftkanals 5 kann zumindest bereichsweise in den Schalter 16 geführt sein, insbesondere in das Schaltergehäuse 52, wie dies u. a. die Fig. 26 zeigt.

In den dargestellten Ausführungsformen beträgt die Querschnittsfläche der Druckluftöffnung 6 des Druckluftkanals 5 etwa 20 mm². In weiteren Ausführungsformen, die an dieser Stelle nicht dargestellt sind, kann die Querschnittsfläche der Druckluftöffnung 6 des Druckluftkanals 5 zwischen 0,5 mm² bis 100 mm² liegen. In dem dargestellten Ausführungsbeispiel weist der Querschnitt des Druckluftkanals 5 eine zumindest im Wesentlichen kreisförmige Grundform und ferner einen Durchmesser von etwa 5 mm auf.

Die in Fig. 4 gezeigte Querschnittsfläche der Saugöffnung 7 des Saugkanals 3 beträgt etwa 450 mm². In weiteren Ausführungsformen kann die Querschnittsfläche der Saugöffnung 5 des Saugkanals 3 zwischen 100 mm² bis 1.000 mm² liegen. Der in den dargestellten Ausführungsbeispielen gezeigte Saugreinigungsvorsatz 1 weist ein Verhältnis zwischen der Querschnittsfläche der Saugöffnung 7 und der Druckluftöffnung 6 von etwa 22,5:1 auf. In weiteren Ausführungsformen kann vorgesehen sein, dass das Verhältnis der Querschnittsfläche der Saugöffnung 7 zu der Querschnittsfläche der Druckluftöffnung 6 zwischen 10:1 bis 100:1 liegt.

Während des Druckbetriebes ist in dem Druckluftkanal 5 ein Überdruck von 7 bar vorgesehen bzw. die Druckluft tritt mit dem vorgenannten Überdruck aus dem Druckluftkanal 5 aus. In weiteren Ausführungsformen kann der Überdruck zwischen 5 bar bis 10 bar liegen. In dem Saugkanal 3 hingegen herrscht ein Unterdruck, der in den dargestellten Ausführungsbeispielen etwa 0,5 bar beträgt. In weiteren Ausführungsformen kann der Unterdruck zwischen 0,3 bis 0,8 bar liegen.

Fig. 5 zeigt, dass das Gehäuse 4 mehrteilig bzw. wenigstens dreiteilig ausgebildet ist, wie dies auch aus den übrigen Figuren ersichtlich ist. Die einzelnen Komponenten des Saugreinigungsvorsatzes 1 und des Gehäuses 5 können ineinander einsteckbar ausgebildet sein. Letztlich kann eine lösbare Verbindung zwischen den mehrteiligen Komponenten des Gehäuses 4 des Saugreinigungsvorsatzes 1 vorgesehen sein.

Das Gehäuse 4 weist einen den Griffbereich 14 aufweisenden Griffabschnitt 8, einen mit dem Griffabschnitt 8 lösbar verbindbaren Gehäusestutzen 9 und ein mit dem Gehäusestutzen 9 lösbar verbindbares Endstück 10 auf. Das Endstück 10, das einem größeren Verschleiß als dem Rest des Gehäuses 4 unterliegt, kann unabhängig von den weiteren Komponenten des Gehäuses 4 ausgetauscht werden. Durch die lösbaren Verbindungen der Komponenten 8, 9, 10 des Gehäuses 4 untereinander kann ein Zugang zum Inneren des Gehäuses 4 erfolgen.

Darüber hinaus ist in dem dargestellten Ausführungsbeispiel gezeigt, dass das Endstück 10 endseitig, dem Gehäusestutzen 9 abgewandt, angeschrägt ausgebildet ist.

Der Gehäusestutzen 9 kann mit dem Griffabschnitt 8 formschlüssig, kraftschlüssig und/oder reibschlüssig lösbar verbunden sein. Das Endstück 10 kann mit dem Gehäusestutzen 9 wiederum ebenfalls formschlüssig, kraftschlüssig und/oder reibschlüssig verbunden sein. Letztlich ist die Verbindung derart ausgebildet, dass ein Lösen der vorgenannten Komponenten während der Benutzung des Saugreinigungsvorsatzes 1 zumindest im Wesentlichen vermieden werden kann.

Fig. 4 zeigt, dass der Saugkanal 3 und der Druckluftkanal 5 zumindest abschnittsweise im Griffabschnitt 8, im Gehäusestutzen 9 und im Endstück 10 vorgesehen sind. In weiteren Ausführungsformen kann der Saugkanal 3 und/oder Druckluftkanal 5 zumindest abschnittsweise am Gehäusestutzen 9 und/oder am Endstück 10 vorgesehen sein. Des Weiteren zeigt Fig. 4, dass der Griffabschnitt 8 innenseitig, dem Endstück 10 zugewandt, eine sich verjüngende Querschnittsfläche aufweist.

Fig. 4 zeigt zudem, dass auch ein formschlüssiges Ineinandergreifen des Endstücks 10 in den Anschlussbereich 59 des Gehäusestutzens 9 vorgesehen sein kann.

Ferner zeigt Fig. 5, dass der Griffabschnittsbereich 13 und/oder der Griffabschnitt 8 rotationssymmetrisch und/oder spiegelsymmetrisch zu einer Mittellängsachse ausgebildet ist.

Zudem zeigt Fig. 5, dass der Griffabschnitt 8 mit dem Anschlussbereich 55 in den Gehäusestutzen 9 einsteckbar ist. Alternativ oder zusätzlich kann der Gehäusestutzen 9 in den Griffabschnitt 8 einsteckbar sein.

Weiter zeigt Fig. 5, dass der Gehäusestutzen 9 mit einem Anschlussbereich 59 in das Endstück 10 einsteckbar ausgebildet ist. Alternativ oder zusätzlich kann das Endstück 10 auch in den Gehäusestutzen 9 einsteckbar ausgebildet sein. Zu den jeweiligen Anschlussbereichen 55, 59 sind korrespondierende Aufnahmebereiche vorgesehen.

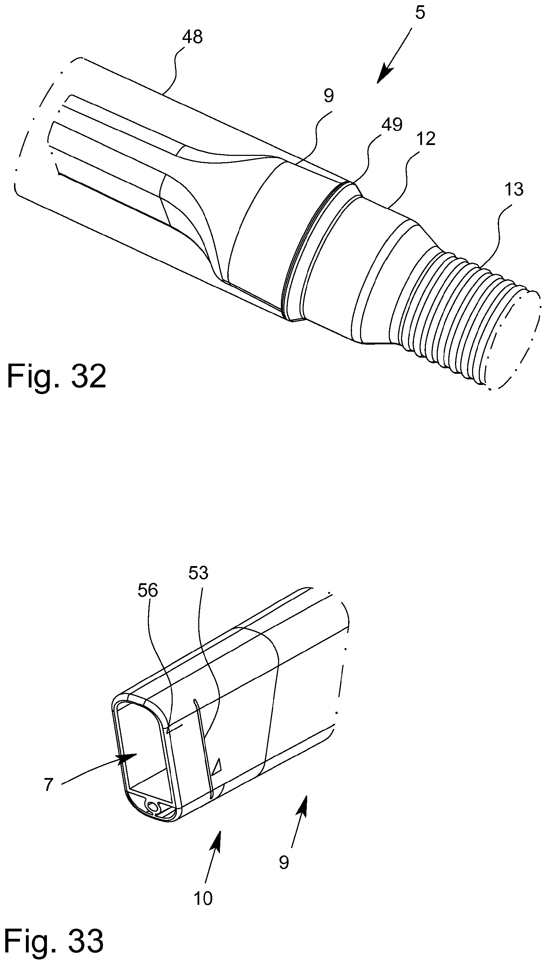

Fig. 32 zeigt, dass im Anschluss an den zu dem Anschlussbereich 55 korrespondierenden Aufnahmebereich eine, insbesondere konische, Verjüngung des Saugkanals 3 des Gehäusestutzens 9 vorgesehen ist. Letztlich wird eine zumindest im Wesentlichen hohlquaderförmige bzw. schlitzartige Form gebildet, wie ebenfalls in Fig. 5 dargestellt.

Nicht dargestellt ist, dass der Saugkanal 3 ein in den Gehäusestutzen 9 eingesetztes Rohrstück 11 aufweist. Das Rohrstück 11 kann in den Griffabschnitt 8 und in das Endstück 10 ragen.

Der Druckluftkanal 5 ist in dem dargestellten Ausführungsbeispiel als Druckluftleitung 27 ausgebildet und zumindest bereichsweise im Gehäusestutzen 9 und im Griffabschnitt 8 angeordnet. Die Druckluftleitung 27 kann als Schlauch, insbesondere Kunststoffschlauch, ausgebildet sein. Ferner endet die Druckluftleitung 27 im Endstück 10, wobei der Druckluftkanal 5 nachfolgend durch einen sich in Strömungsrichtung an die Druckluftleitung 27 anschließenden Kanal des Endstücks 10 gebildet ist.

Nicht dargestellt ist, dass die Druckluftleitung 27 am Rohrstück 11 gehalten wird. Dabei kann die Druckluftleitung 27 am Rohrstück 11 eingeklemmt bzw. über entsprechende Haltemittel von dem Rohrstück 11 gehalten werden.

Nicht dargestellt ist, dass der Druckluftkanal 5, insbesondere die Druckluftleitung 27, zumindest bereichsweise von dem Saugkanal in den Gehäusestutzen 9 durch wenigstens eine Trennleiste 46 getrennt ist. Die nicht dargestellte Trennleiste 46 kann durch eine Schraubverbindung mit dem Gehäusestutzen 9 und mit der Innenwand 47 des Gehäusestutzens 9 fixiert werden. Die Schraubverbindung ist schematisch aus der Explosionsansicht in Fig. 5 ersichtlich. Letztlich dient die Trennleiste 46 zur Beabstandung der Druckluftleitung 27 von dem Saugkanal 3.

Der in Fig. 4 dargestellte Druckluftkanal 5 grenzt an die Innenwand 47 des Gehäusestutzens 9 und an die Innenwand des Griffabschnitts 8 an.

Nicht dargestellt ist, dass die Trennleiste 46 mit der Innenwand 47 des Gehäusestutzens 9, insbesondere durch Schraubverbindungen, verbunden ist.

Darüber hinaus kann bei weiteren Ausführungsformen vorgesehen sein, dass an der Innenwandung 47 des Gehäusestutzens 9 und/oder an der Innenwand des Griffabschnitts 8 für die Druckluftleitung 27 korrespondierende Vertiefungen zur zumindest bereichsweisen Aufnahme der Druckluftleitung 27 vorgesehen sind. Durch die nicht näher dargestellten Vertiefungen kann die Druckluftleitung 27 sicher durch den Griffabschnitt 8 und/oder den Gehäusestutzen 9 geführt sein.

Es versteht sich, dass auch bei weiteren, nicht dargestellten Ausführungsformen auch ein die Druckluftleitung 27 aufnehmender Kanal, insbesondere angrenzend an die Innenwand 47 des Gehäusestutzens 9 und/oder der Innenwand des Griffabschnitts 8, vorgesehen sein kann, der die Druckluftleitung 27 aufnimmt und letztlich zum Endstück 10 führt.

Im Übrigen zeigt Fig. 5, dass der Griffabschnitt 8 zwei äußere Anschlussenden 12 und einen zwischen den Anschlussenden 12 vorgesehenen Griffabschnittsbereich 13 aufweist. Die Außendurchmesser der Anschlussenden 12 sind jeweils größer als der Außendurchmesser des Griffabschnittsbereichs 13. Der Griffabschnittsbereich 13 kann den Griffbereich 14 bilden.

Des Weiteren zeigt Fig. 2, dass das freie bzw. betätigbare Ende des Schwenkhebels 51 in den Griffabschnittsbereich 13, der gegenüber den Anschlussende 12 vertieft ausgebildet ist, ragt. Das andere Ende des Schwenkhebels 51 ist an dem Schaltergehäuse 52 gelagert, wobei der Schwenkhebel 51 um eine Schwenkachse herum verschwenkbar ausgebildet sein kann.

Der Saugkanal 3 kann sich im Bereich des Griffabschnittsbereichs 13 und des Gehäusestutzens 9 hin zur Saugöffnung 7 verjüngen.

Der Schalter 16 und das Schaltergehäuse 52 sind in den dargestellten Ausführungsbeispielen am Griffabschnitt 8 angeordnet. Die Fig. 16 zeigt, dass das Schaltergehäuse 52 an dem der Saugöffnung 7 abgewandten Anschlussende 12 des Griffabschnitts 8 angeordnet ist und sich zumindest bereichsweise in den Griffabschnittsbereich 13 erstreckt. Der Schwenkhebel 51 grenzt an den Griffabschnittsbereich 13 an und ragt mit seinem freien Ende, das zur Betätigung dient, in den Griffbereich 14 hinein, wie dies insbesondere aus Fig. 13 hervorgeht.

Fig. 5 zeigt, dass das Anschlussende 12 und der Griffabschnittsbereich 13 eine zumindest im Wesentlichen hohlzylindrische Form aufweisen.

In Fig. 3 ist gezeigt, dass der Griffabschnittsbereich 13 letztlich von außen frei zugänglich ist und nicht durch weitere Komponenten, insbesondere nicht durch einen den Griffabschnittsbereich 13 überspannenden Bügel, behindert wird. Letztlich kann ein Nutzer von jeder Seite bzw. in jeder Position den Griffabschnittsbereich 13 des Saugreinigungsvorsatzes 1 umfassen. Der Saugreinigungsvorsatz 1 kann zur Innenreinigung von Kraftfahrzeugen einfach geführt werden.

Ferner zeigt Fig. 3, dass wenigstens ein Außendurchmesser eines Anschlussendes 12, im dargestellten Ausführungsbeispiel beide Außendurchmesser der Anschlussenden 12, größer als der Außendurchmesser des Griffabschnittsbereichs 13 ausgebildet ist. Insbesondere ist der Außendurchmesser wenigstens eines Anschlussendes 12 um wenigstens 10% größer als der Außendurchmesser des Griffabschnittsbereichs 13 ausgebildet. Durch den vorgenannten Unterschied zwischen den Außendurchmessern ergibt sich eine definierte Länge des Griffabschnittsbereichs 13 und es wird im Übrigen eine Begrenzung der Bewegung der Hand auf dem Griffabschnittsbereich 13 im Benutzungszustand vorgegeben.

Fig. 2 zeigt, dass der Griffabschnittsbereich 13 außenseitig eine Riffelung und/oder eine strukturierte Oberfläche aufweist. Die Riffelung ist rillenartig - in Art von aneinander gereihten Rillen - ausgebildet, wobei die Rillen beabstandet zueinander an der Außenseite des Griffabschnittsbereichs 13 angeordnet sind.

Nicht dargestellt ist, dass eine Leuchteinrichtung 18 beim Saugreinigungsvorsatz 1 vorgesehen sein kann. Die Leuchteinrichtung 18 weist wenigstens eine LED auf. Darüber hinaus ist die Leuchteinrichtung 18 in einem nicht dargestellten Ausführungsbeispiel am Rohrstück 11 und am Gehäusestutzen 9 gehalten. In weiteren nicht dargestellten Ausführungsformen kann die Leuchteinrichtung 18 am Endstück 10, am Gehäusestutzen 9, am Griffabschnitt 8, am Bügel 14 und/oder am Rohrstück 11 angeordnet, insbesondere fest mit den vorgenannten Komponenten verbunden sein.

Weiter nicht dargestellt ist, dass die Leuchteinrichtung 18 über wenigstens eine Leitung 19 zur Stromführung verbunden ist. Die Leitung 19 ist mit einem Stromanschluss 24, der an dem Schalter 16 vorgesehen sein kann, verbunden. Die Leitung 19 kann am Rohrstück 11 gehalten und an der der Druckluftleitung 27 gegenüberliegenden Seite des Rohrstücks 11 der Leuchteinrichtung 18 zugeführt werden.

In weiteren nicht dargestellten Ausführungsformen kann die Leitung 19 innenseitig am Rohrstück 11, außenseitig auf dem Saugkanal 3 und/oder innenseitig am Endstück 10 angeordnet und/oder gehalten sein.

In einem nicht dargestellten Ausführungsbeispiel kann der Stromanschluss 24 benachbart zu dem Druckluftanschluss 15 vorgesehen sein.

Weiter nicht dargestellt ist, dass die Leuchteinrichtung 18 am Gehäusestutzen 9 und am Rohrstück 11 in dem Kanal 33 und in dem Gehäusestutzen 9 angeordnet ist. Das Endstück 10 kann teilweise außenseitig den Gehäusestutzen 9 überdecken, so dass die Leuchteinrichtung 18 außenseitig auch von dem Endstück 10 umgeben sein kann.

Die Leuchteinrichtung 18 ist in einem nicht dargestellten Ausführungsbeispiel an der dem Gehäusestutzen 9 zugewandten Außenseite des Rohrstücks 11 angeordnet. Aus der Lichtaustrittsöffnung 34 tritt der Lichtstrahl bzw. -kegel der die wenigstens eine LED, in dem dargestellten Ausführungsbeispiel zwei LEDs, aufweisenden Leuchteinrichtung 18 aus. Eine LED-Abdeckung schützt die LED und/oder die Leuchteinrichtung 18 vor Verschmutzungen. Der sich ergebende Lichtstrahl ist durch die Beabstandung der Lichtaustrittöffnung 34 von der Saugöffnung 7 bzw. der Druckluftöffnung 6 bei Verwendung des Saugreinigungsvorsatzes 1 zur Reinigung eines Innenraumes von Kraftfahrzeugen größer bzw. breiter als der erzeugte Lichtstrahl.

Der in Fig. 1 dargestellte Saugreinigungsvorsatz 1 weist ein Gehäuse 4 aus einem Kunststoffmaterial auf. Das Kunststoffmaterial weist Polyethylen (PE) auf. In weiteren Ausführungsformen kann das Material des Gehäuses 4, des Endstücks 10, des Gehäusestutzens 9, des Schalters 16, des Schwenkhebels 51, des Schaltergehäuses 52, des Griffabschnitts 8 und/oder des Führungskanals 44 einen, vorzugsweise thermoplastischen, Kunststoff, bevorzugt Polyethylen (PE), Polypropylen (PP), Polyvinylchlorid (PVC) und/oder Polystyrol (PS), aufweisen.

Nicht dargestellt ist, dass endseitig an dem dem Endstück 10 abgewandten Anschlussende 12 ein zu dem Druckluftanschluss 15 benachbartes bügelartiges Leitungsbefestigungsmittel 28 befestigt ist, welches zur Fixierung der Leitung der Drucklufteinrichtung 21 und der Energiezufuhreinrichtung 25 beispielsweise mittels Kabelbinder ausgebildet ist.

Der in Fig. 3 dargestellte Saugreinigungsvorsatz 1 ist zum Einsetzen und zur Halterung in einem Köcher 48 im Nicht-Gebrauchszustand vorgesehen.

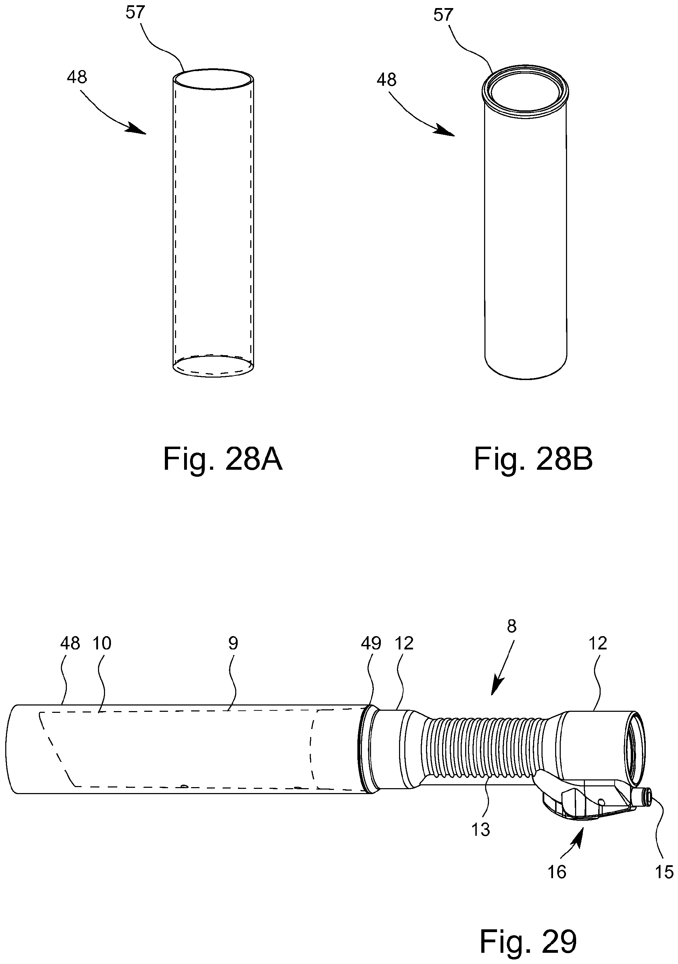

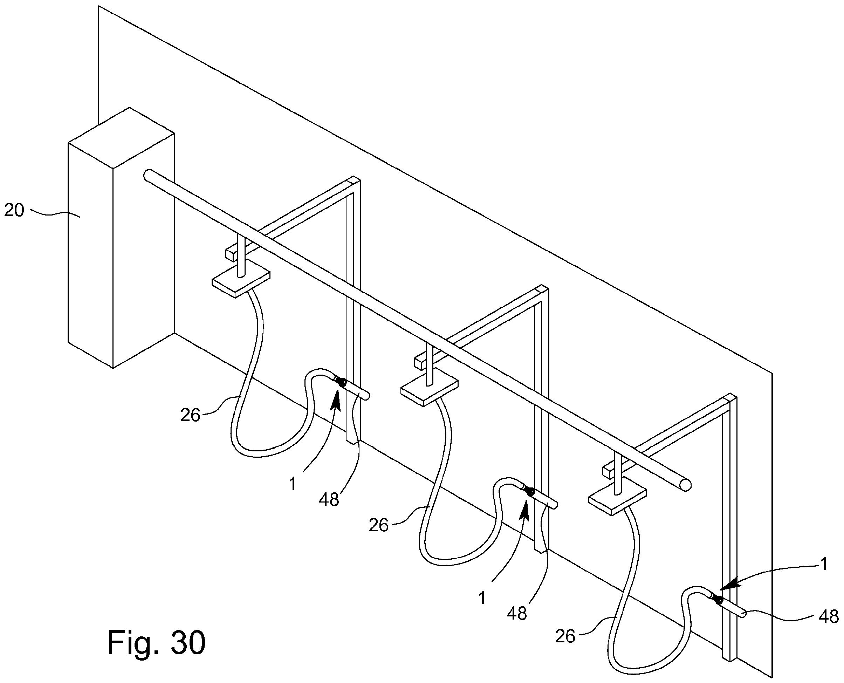

Eine Halterung des Saugreinigungsvorsatzes 1 in dem Köcher 48 ist beispielsweise in den Fig. 29 und 30 dargestellt. Der Nicht-Gebrauchszustand liegt letztlich vor und nach der Innenreinigung der Kraftfahrzeuge vor bzw. dann, wenn der Saugreinigungsvorsatz 1 nicht zur Innenreinigung genutzt wird. In diesem Zustand kann der Saugreinigungsvorsatz 1 in den Köcher 48, wie aus Fig. 30 ersichtlich, eingesetzt und darin gehalten werden.

Als Griffbereich 14 kann zudem zusätzlich derjenige Bereich des Saugreinigungsvorsatzes 1 verstanden werden, der bei in den Köcher 48 eingesetzten Zustand des Saugreinigungsvorsatzes 1 außerhalb des Köchers 48 bzw. oberhalb des äußeren Randes 57 des Köchers 48 angeordnet ist.

Fig. 6 zeigt auch, dass außenseitig am Gehäuse 4 zwischen der Saugöffnung 7 und dem Griffbereich 14 ein über den Griffbereich 14 überstehender Anschlag 49 zum Zusammenwirken mit dem äußeren Rand 57 des Köchers 48 vorgesehen ist. Ein Zusammenwirken zwischen dem Anschlag 49 und dem äußeren Rand 57 bzw. der äußeren Randkante des Köchers 48 ist unter anderem in Fig. 29 gezeigt.

Nicht dargestellt ist, dass der Anschlag 49 als Stufe ausgebildet ist.

Fig. 29 zeigt, dass der Anschlag 49 bündig mit dem äußeren Rand 57 des Köchers 48 abschließt bzw. auf diesem aufliegt, insbesondere wobei der Anschlag 49 über den äußeren Rand 57 des Köchers 48 übersteht. Das Zusammenwirken zwischen dem Anschlag 49 und dem äußeren Rand 57 des Köchers 48 stellt die Bildung eines zumindest im Wesentlichen druckdichten Abschlusses zwischen dem Köcher 48 und dem Saugreinigungsvorsatz 1 im eingesetzten Zustand des Saugreinigungsvorsatzes 1 in den Köcher 48 sicher. Dabei versteht es sich, dass mit dem Ausdruck "druckdicht" keine absolute Druckdichtigkeit erreicht wird. "Druckdicht" bezeichnet letztlich den Zustand, wenn der Anschlag 49 bündig auf dem äußeren Rand 57 des Köchers 48 aufliegt.

Fig. 5 zeigt, dass der Anschlag 49 als umlaufender, insbesondere ringförmiger, Vorsprung ausgebildet ist. Letztlich ist der Anschlag 49 an seiner dem äußeren Rand 57 des Köchers 48 zugewandten Anordnungsfläche zumindest im Wesentlichen gerade, nicht unterbrochen und/oder eben ausgebildet. Der Anschlag 49 kann korrespondierend zum äußeren Rand 57 des Köchers 48 ausgebildet sein, so dass sich eine im eingesetzten Zustand des Saugreinigungsvorsatzes 1 in den Köcher 48 druckdichte und reibschlüssige Verbindung ergibt.

Fig. 29 zeigt, dass der Anschlag 49 letztlich eine Begrenzung der Einschubbewegung des Saugreinigungsvorsatzes 1 in den Köcher 48 darstellt. Insbesondere ist keine Bewegung über den Anschlag 49 hinaus in den Köcher 48 hinein möglich. Dies ist vor allem deshalb von Bedeutung, da beim Stand der Technik der Saugreinigungsvorsatz 1 häufig vom Nutzer sehr fest in den Köcher 48 hineingesteckt wird und sich dadurch eine sehr feste reibschlüssige Verbindung ergibt, die es nicht selten sehr schwierig macht, den Saugreinigungsvorsatz 1 wieder aus dem Köcher 48 herauszuziehen. Diese Problematik wird bei der Erfindung komplett vermieden.

Fig. 5 zeigt, dass der Anschlag 49 an dem der Saugöffnung 7 zugewandten Anschlussende 12 angeordnet ist. Der Anschlag 49 steht dabei außenseitig über das Anschlussende 12 über.

Fig. 32 zeigt, dass der Anschlag 49 unmittelbar an den Gehäusestutzen 9 angrenzt. Dabei steht der Anschlag 49 sowohl über das Anschlussende 12 als auch über den Gehäusestutzen 9 über. Dabei weist der Anschlag 49 eine die Materialstärke des Gehäusestutzens 9 überragende Breite auf. Die Breite bzw. Höhe des Anschlages 49 ist insbesondere in Abhängigkeit des Einsteckweges des Saugreinigungsvorsatzes 1 in den Köcher 48 und in Abhängigkeit des äußeren Randes 57 des Köchers 48 ausgebildet.

Nicht dargestellt ist, dass der, insbesondere als Stufe ausgebildete, Anschlag 49 außenseitig an dem Gehäusestutzen 9 angeordnet ist. In diesem Fall müsste der Anschlag 49 nicht zwingend über den Griffbereich 14, den Griffabschnitt 8 und/oder über das Anschlussende 12 überstehen. Allerdings sollte der Anschlag 49 zur Begrenzung der Einsteckbewegung in den Köcher 48 ausgebildet sein. Dies setzt letztlich voraus, dass hinter dem Anschlag 49 - der Saugöffnung 7 zugewandt - keine den Anschlag 49 übersteigende Erhöhung oder Vergrößerung des Saugreinigungsvorsatzes 1 bzw. des Gehäuses 4 vorgesehen ist.

Fig. 33 zeigt, dass das Endstück 10 an dem die Saugöffnung 7 bildenden Saugende eine Schräge 56 aufweist. Die Schräge 56 kann insbesondere als eine 45° ± 15° Schräge ausgebildet sein.

Aus Fig. 33 geht ferner hervor, dass das Endstück 10 außenseitig eine, insbesondere parallel zur Schräge 56 verlaufende, Markierung 53 als Verschleißanzeige aufweist. Die Markierung 53 ist derart angeordnet, dass sie an dem mit dem Gehäusestutzen 9 verbundenen Endstück 10 beabstandet zu dem der Saugöffnung 7 zugewandten äußeren Rand 50 des Gehäusestutzens 9 angeordnet ist. Der äußere Rand 50 des Gehäusestutzens 9 ist in Fig. 4 gezeigt.

In Fig. 1 ist eine Reinigungsvorrichtung 2 zur Innenreinigung von Kraftfahrzeugen gezeigt. Die Reinigungsvorrichtung 1 weist einen Saugreinigungsvorsatz 2 der zuvor beschriebenen Art auf. Ferner weist die Reinigungsvorrichtung 2 eine Gebläseeinrichtung 20 zur Erzeugung eines Unterdrucks und eine Drucklufteinrichtung 21 auf. In dem dargestellten Ausführungsbeispiel weist die Drucklufteinrichtung 21 einen Druckluftspeicher 22 und einen Drucklufterzeuger 23 auf. In dem Druckluftspeicher 22 wird die Druckluft gespeichert bzw. bevorratet und durch den Drucklufterzeuger 23 wird der benötigte Überdruck der Druckluftströmung erzeugt. Weiterhin zeigt Fig. 1, dass die Drucklufteinrichtung 21 dem Druckluftkanal 5 des Saugreinigungsvorsatzes 1 zugeordnet ist und die Gebläseeinrichtung 20 dem Saugkanal 3 des Saugreinigungsvorsatzes 1 zugeordnet ist. Eine Zuordnung erfolgt in dem dargestellten Ausführungsbeispiel derart, dass die Gebläseeinrichtung 20 über einen Saugschlauch 26 mit dem Saugreinigungsvorsatz 1 strömungsmäßig verbunden ist. Der Druckluftkanal 5 ist über den Druckluftanschluss 15 über eine weitere Druckluftleitung mit der Drucklufteinrichtung 21 verbunden.

Die weitere Druckluftleitung kann als Druckluftanschlussleitung 36 ausgebildet sein.

Der Schalter 16 des Saugreinigungsvorsatzes kann die durch die Druckluftanschlussleitung 36 bereitgestellte Druckluftströmung freigeben und übergibt demgemäß die Druckluftströmung in den Druckluftkanal 5. Letztlich kann der Schalter 16 die die durch die Druckluftanschlussleitung 36 bereitgestellte Druckluftströmung sperren und die Druckluftströmung nicht in den Druckluftkanal 5 überführen.

Nicht dargestellt ist, dass die Leuchteinrichtung 18 über einen Stromanschluss über eine weitere Stromleitung mit einer Energiezufuhreinrichtung, die den benötigten Strom für die Leuchteinrichtung 18 zur Verfügung stellt, verbunden ist. Die Energiezufuhreinrichtung kann in weiteren Ausführungsformen einen Energiespeicher, beispielsweise einen Akkumulator, aufweisen. Die Energiezufuhreinrichtung kann auch als Anschluss zum öffentlichen Stromnetz ausgebildet sein. Des Weiteren kann die Energiezufuhreinrichtung in einem nicht dargestellten Ausführungsbeispiel über einen Schaltschrank gesteuert werden.

Nicht dargestellt ist, dass die Leuchteinrichtung 18 des Saugreinigungsvorsatzes 1 mit der Gebläseeinrichtung 20, dem Schalter 16 und/oder der Drucklufteinrichtung 21, insbesondere dem Ventil der Drucklufteinrichtung 21, gekoppelt sein kann. So kann ein Einschalten der Leuchteinrichtung 18 im Saugbetrieb und/oder im Druckluftbetrieb vorgesehen sein. Ferner kann eine Mehrzahl an Leuchtmitteln der Leuchteinrichtung 18 vorgesehen sein, die beispielsweise unabhängig voneinander steuerbar sind.

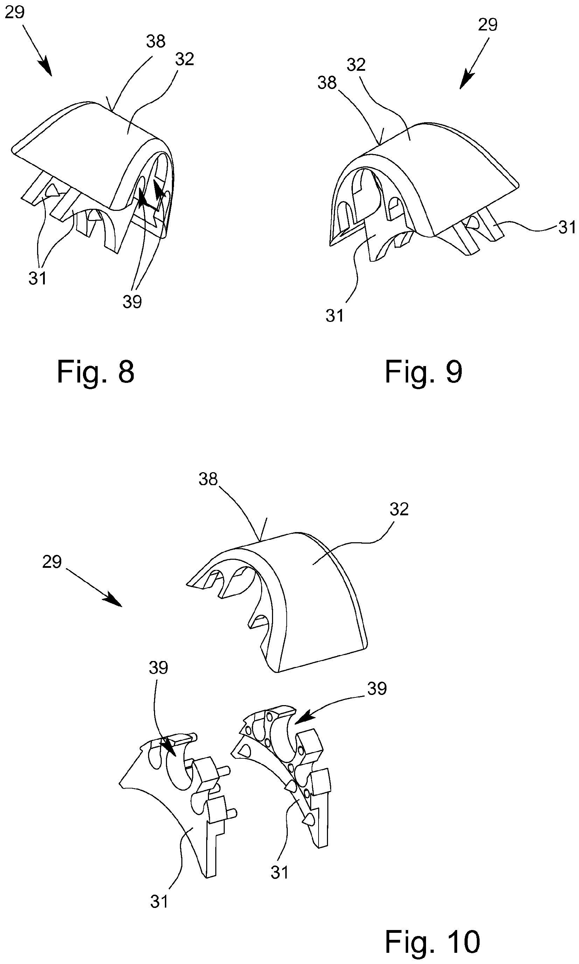

Der Saugreinigungsvorsatz 1 ist drehsteif mit Saugschlauch 26 in dem in Fig. 8 dargestellten Ausführungsbeispiel verbunden. Nicht dargestellt ist, dass an dem Anschlussende 12 eine Verdrehsicherung 37 in Form einer Klemmschraube vorgesehen ist, die mit dem Saugschlauch 26 zusammenwirkt.

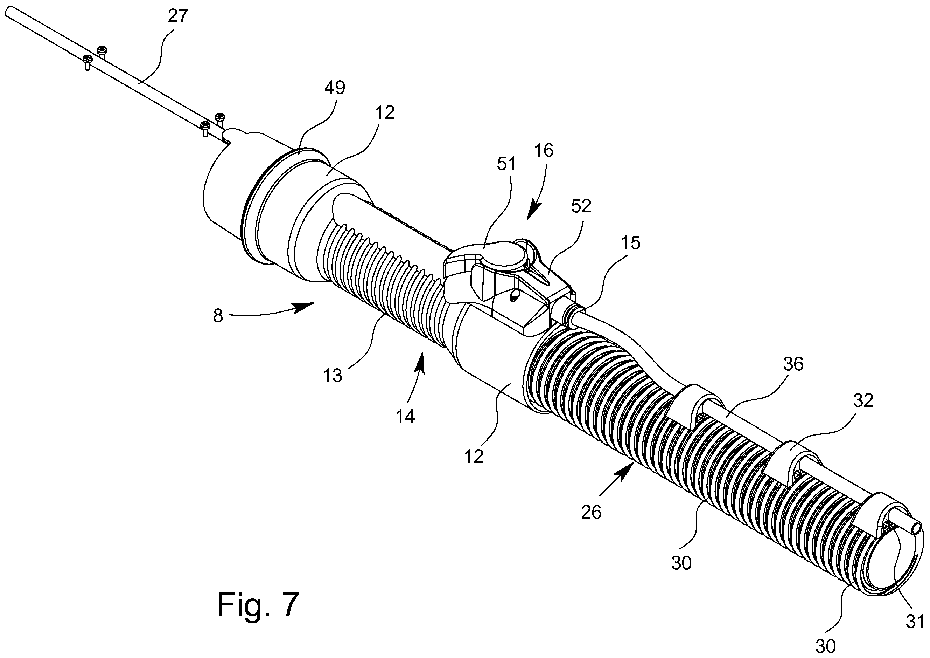

Fig. 7 zeigt, dass eine den Saugreinigungsvorsatz 1 mit der Drucklufteinrichtung 21 verbindende Druckluftanschlussleitung 36 über wenigstens ein Befestigungsmittel 29 mit dem Saugschlauch 26 verbunden sind. Die Druckluftanschlussleitung 36 ist mit dem Druckluftanschluss 15 verbunden.

Nicht dargestellt ist, dass wenigstens eine die Leuchteinrichtung 18 mit einer Energiezufuhreinrichtung verbindende elektrische Anschlussleitung 35 über wenigstens ein Befestigungsmittel 29 mit dem Saugschlauch 26 verbunden ist. Die Anschlussleitung 35 kann mit dem Stromanschluss und verbunden sein.

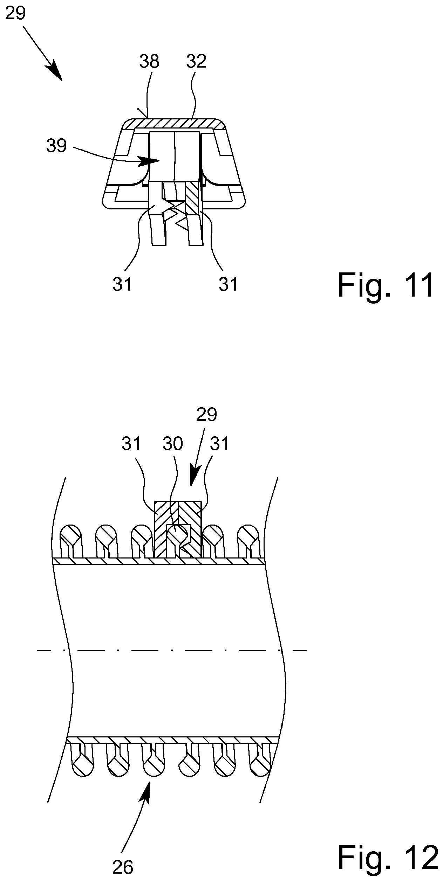

Das Befestigungsmittel 29 ist mit dem geriffelten Saugschlauch 26 über eine lösbare Rastverbindung verbunden. Fig. 12 zeigt, dass das Befestigungsmittel 29 mit einem Rillenschenkel 30 des Saugschlauches 26 verrastet ist. Das in den Fig. 8 bis 10 gezeigte Befestigungsmittel 29 ist mehrteilig und zur Aufnahme der Druckluftanschlussleitung 36 und gegebenenfalls einer nicht dargestellten elektrischen Anschlussleitung 35 ausgebildet.

Fig. 10 und 11 zeigen, dass das Befestigungsmittel 29 zwei miteinander zu verrastende Seitenteile 31 und einen mit den Seitenteilen 31 formschlüssig zu verbindenden Aufsatz 32 aufweist, wobei der Aufsatz 32 eine gerundete bzw. gekrümmte Außenseite 38 zur Abdeckung scharfer Kanten der Seitenteile 31 aufweist. Durch die gerundete Ausbildung des Aufsatzes 32 ergibt sich eine zumindest im Wesentlichen bogenabschnittsförmige Querschnittsform des Aufsatzes 32 und des Befestigungsmittels 29.

Das Befestigungsmittel 29 weist eine Aufnahme mit wenigstens zwei, bei dem in Fig. 10 gezeigten Ausführungsbeispiel drei, Aufnahmebereichen 39 auf. Fig. 7 zeigt, dass in dem Aufnahmebereich 39 die Druckluftanschlussleitung 36 vorgesehen und in diesen sicher fixiert ist.

Für die wenigstens eine, nicht dargestellte elektrische Anschlussleitung 35 sind zwei Aufnahmebereiche 39 vorgesehen, so dass das Befestigungsmittel 29 unabhängig von der Aufnahme der elektrischen Anschlussleitung 35 an dem Saugschlauch 26 verrastet werden kann, wie sich dies ebenfalls aus Fig. 7 ergibt.

Fig. 7 zeigt, dass der Biegeradius und/oder die Bewegungsfreiheit des Saugschlauchs 26 durch die Befestigungsmittel 29 nicht reduziert bzw. eingeschränkt wird. Es ist eine Mehrzahl von Befestigungsmitteln 29 zur Fixierung der Druckluftanschlussleitung 36 an dem Saugschlauch 26 vorgesehen.

Des Weiteren zeigt Fig. 7, dass die Druckluftanschlussleitung 36 derart über die Befestigungsmittel 29 an dem Saugschlauch 26 angerordnet wird, dass sie in der Flucht des Druckluftanschlusses 15 und des Stromanschlusses 24 liegt bzw. vorgesehen ist.

Ein Köcher 48 ist gemäß Fig. 30 bei einer Reinigungsvorrichtung 2 zur Halterung des Saugreinigungsvorsatzes 1 im Nicht-Gebrauchszustand vorgesehen. In Fig. 30 ist die Drucklufteinrichtung 21 und die Druckluftanschlussleitung 36 aus Gründen der Übersichtlichkeit nicht dargestellt.

In Fig. 28A ist der Köcher 48 dargestellt. Der Köcher 48 kann hohlzylinderförmig ausgebildet sein. Darüber hinaus ist der Köcher 48 endseitig an seiner Unterseite geschlossen und weist der Unterseite gegenüberliegend eine Köcheröffnung auf.

Bei dem in Fig. 28A dargestellten Köcher 48 ist vorgesehen, dass der äußere Rand 57 des Köchers 48 zumindest im Wesentlichen bündig mit dem Anschlag 49 des Saugreinigungsvorsatzes 1 im Nicht-Gebrauchszustand abschließt, wie in Fig. 29 gezeigt.

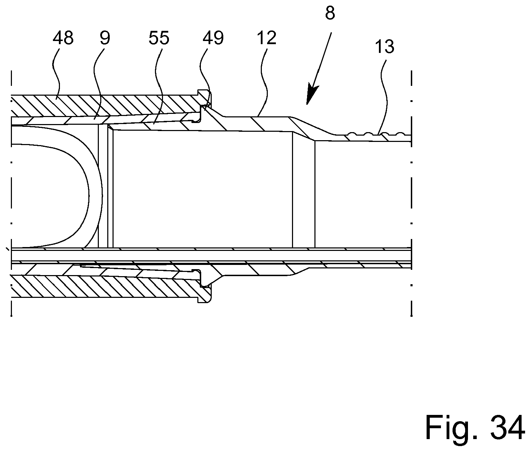

Fig. 28B zeigt, dass als äußerer Rand 57 des Köchers 48 der äußere Randbereich verstanden werden kann. Der äußere Rand 57 weist in dem dargestellten Ausführungsbeispiel einen inneren Anschlag auf, der zumindest im Wesentlichen bündig mit dem Anschlag 49 des Saugreinigungsvorsatzes 1 im Nicht-Gebrauchszustand abschließen kann. In diesem Zusammenhang kann der Anschlag 49 des Saugreinigungsvorsatzes 1 im Nicht-Gebrauchszustand und im im Köcher 48 eingesetzten Zustand zumindest bereichsweise von dem äußeren Rand 57 des Köchers 48 umgeben sein, wie aus Fig. 34 ersichtlich.

Fig. 34 zeigt, dass der Außendurchmesser des äußeren Randbereichs 57 des Köchers 48 größer als der Außendurchmesser des Anschlags 49 des Saugreinigungsvorsatzes 1 ausgebildet ist.

In weiteren Ausführungsformen kann der Außendurchmesser des äußeren Randbereichs 57 des Köchers 48 zumindest im Wesentlichen gleich dem Außendurchmesser des Anschlags 49 des Saugreinigungsvorsatzes 1 ausgebildet sein. Dabei liegen die einander zugewandten Flächen des Anschlags 49 und der im Köcher 48 gebildeten Stufe aufeinander auf, so dass sich letztlich die zuvor beschriebene Anschlagfunktion ergibt. Fig. 34 zeigt weiter, dass der Innendurchmesser des inneren Anschlags des äußeren Rands 57 des Köchers 48 größer oder gleich dem größten Außendurchmesser des in dem im Köcher 48 eingesetzten Zustand hinter (d.h. der geschlossenen Unterseite des Köchers 48 zugewandt) dem inneren Anschlag des Köchers 48 angeordneten vorderen Bereiches des Saugreinigungsvorsatzes 1 ausgebildet ist.

Der Anschlag 49 des Saugreinigungsvorsatzes 1 wirkt derart mit dem äußeren Rand 57 des Köchers 48 zusammen, dass sich ein zumindest im Wesentlichen druckdichter Abschluss ergibt. Der druckdichte Abschluss ergibt sich im Nicht-Gebrauchszustand. Der Unterdruck wird insbesondere kontinuierlich durch die Gebläseeinrichtung 20 bereitgestellt. Durch den druckdichten Abschluss kann ein zumindest im Wesentlichen in sich geschlossenes System bereitgestellt werden, sofern die Reinigungsvorrichtung 2 lediglich einen Saugreinigungsvorsatz 1 aufweist.

In Fig. 30 ist gezeigt, dass die Reinigungsvorrichtung 2 eine Mehrzahl von Saugreinigungsvorsätzen 1 aufweist. Dabei kann auch lediglich ein Saugreinigungsvorsatz 1 in den Köcher 48 eingesetzt werden, während ein weiterer Saugreinigungsvorsatz 1 benutzt wird. In diesem Fall wäre kein in sich geschlossenes System vorhanden, allerdings wird die für die Gebläseeinrichtung 20 benötigte elektrische Energie durch die Anordnung wenigstens eines Saugreinigungsvorsatzes 1 in dem Köcher 48 und den druckdichten Abschluss zwischen dem Köcher 48 und dem Saugreinigungsvorsatz 1 verringert.

Fig. 29 zeigt, dass der Anschlag 49 bündig mit dem äußeren Rand 57 des Köchers 48 abschließt und auf diesen äußeren Rand 57 aufliegt.

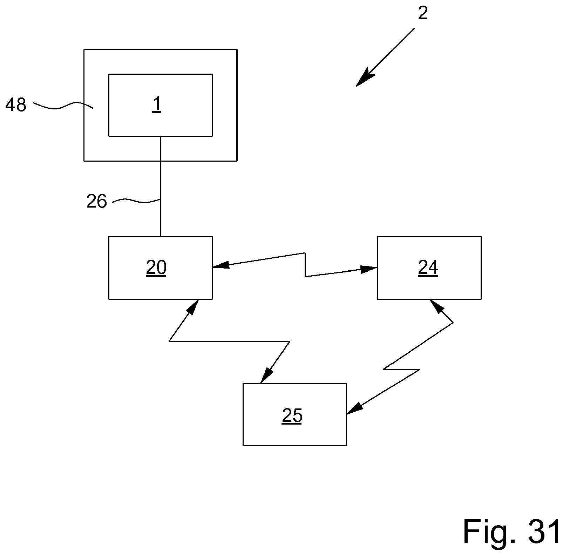

Fig. 31 zeigt, dass die Gebläseeinrichtung 20 eine Steuereinrichtung 24 aufweist. Die Steuereinrichtung 24 kann die der Gebläseeinrichtung 20 zugeführte elektrische Energie von einer Energieversorgungseinrichtung 25 zur Erzeugung des Unterdrucks während des in den Köcher 48 eingesetzten Zustandes des Saugreinigungsvorsatzes 1 verringern.

Insbesondere kann der Steuereinrichtung 24 wenigstens ein Drucksensor zugeordnet sein, der insbesondere die zu überwindende Druckdifferenz misst und/oder bestimmt. Sofern der Saugreinigungsvorsatz 1 in den Köcher 48 eingesetzt ist und sich ein druckdichter Abschluss zwischen dem äußeren Rand 57 des Köchers 48 und dem Anschlag 49 ergibt, ist insbesondere die Druckdifferenz sehr gering. Dadurch kann die von der Energieversorgungseinrichtung 25 bereitgestellte elektrische Energie für die Gebläseeinrichtung 20 reduziert werden.

Im Gebrauchszustand ist jedoch eine Druckdifferenz zum Atmosphärendruck (ca. 1 bar) vorhanden, die letztlich den "Saugbetrieb" sicherstellt. Zum Bereitstellen der kontinuierlichen Saugluftströmung und des dafür benötigten Unterdrucks wird insbesondere im Gebrauchszustand die Druckdifferenz gehalten und somit auch die dafür benötigte elektrische Energie durch die Energieversorgungseinrichtung 25 bereitgestellt.

Das Verfahren zur Innenreinigung von Kraftfahrzeugen ist in den dargestellten Ausführungsbeispielen nicht gezeigt. Bei dem Verfahren zur Innenreinigung von Kraftfahrzeugen wird die zuvor erläuterte Reinigungsvorrichtung 1 verwendet. Zur Innenreinigung werden im Saugbetrieb Schmutz und/oder Partikel abgesaugt, wobei während des Saugbetriebes im Druckluftbetrieb mittels einer Druckluftströmung Schmutz und/oder Partikel aufwirbelbar sind.

Der Druckluftbetrieb ist über den Schalter 16 zuschaltbar. So kann das Verfahren in einem Saugbetrieb, einem Druckluftbetrieb, einem Saug- und Druckluftbetrieb und einem Saugbetrieb mit bedarfsweiser Zuschaltung des Druckbetriebes betrieben werden. Durch die Druckluftströmung können, insbesondere schwer zugängliche, Partikel verwirbelt bzw. aufgewirbelt und anschließend über die Saugluftströmung aufgesaugt werden. So können mit dem Verfahren auch schwer zu erreichende Bereiche des Innenraums von Kraftfahrzeugen sicher von Schmutzpartikeln befreit werden. Darüber hinaus können die Schmutzpartikel aus schwer zugänglichen Bereichen herausgelöst und in einfach zugängliche Bereiche mittels der Druckluftströmung verblasen bzw. transportiert werden. Anschließend können die Schmutzpartikel aus den einfach zugänglichen Bereichen durch die Saugluftströmung aufgesaugt bzw. entfernt werden.

### Bezugszeichenliste:

- 1: Saugreinigungsvorsatz
- 2: Reinigungsvorrichtung
- 3: Saugkanal
- 4: Gehäuse
- 5: Druckluftkanal
- 6: Druckluftöffnung
- 7: Saugöffnung
- 8: Griffabschnitt
- 9: Gehäusestutzen
- 10: Endstück
- 11: Rohrstück
- 12: Anschlussende
- 13: Griffabschnittsbereich
- 14: Griffbereich
- 15: Druckluftanschluss
- 16: Schalter
- 17: Feder
- 18: Leuchteinrichtung
- 19: Leitung
- 20: Gebläseeinrichtung
- 21: Drucklufteinrichtung
- 22: Druckluftspeicher
- 23: Drucklufterzeuger
- 24: Steuereinrichtung
- 25: Energieversorgungseinrichtung
- 26: Saugschlauch
- 27: Druckluftleitung
- 28: Leitungsbefestigungsmittel
- 29: Befestigungsmittel
- 30: Rillenschenkel des Saugschlauches
- 31: Seitenteil
- 32: Aufsatz
- 33: Kanal
- 34: Lichtaustrittsöffnung
- 35: elektrische Anschlussleitung
- 36: Druckluftanschlussleitung
- 37: Verdrehsicherung
- 38: Außenseite Aufsatz
- 39: Aufnahmebereich
- 40: Betätigungsmittel
- 41: Auslösemittel
- 42: Sperre
- 43: Kanalöffnung
- 44: Führungskanal
- 45: Vorsprung
- 46: Trennleiste
- 47: Innenwand von 9
- 48: Köcher
- 49: Anschlag
- 50: äußerer Rand von 9
- 51: Schwenkhebel
- 52: Schaltergehäuse
- 53: Markierung
- 54: äußeres Ende von 3
- 55: Anschlussbereich von 8
- 56: Schräge
- 57: äußerer Rand von 48
- 58: Steg von 44
- 59: Anschlussbereich von 9

## Patentansprüche

1. Verwendung eines Saugreinigungsvorsatzes (1) einer Reinigungsvorrichtung (2) zur Innenreinigung von Kraftfahrzeugen mittels einer Saugluftströmung, mit einem einen Saugkanal (3) zum Führen der Saugluftströmung (4) aufweisenden Gehäuse,
wobei im Gehäuse (4) zusätzlich zum Saugkanal (3) ein Druckluftkanal (5) zum Führen einer Druckluftströmung vorgesehen ist und/oder wobei dem Gehäuse (4) zusätzlich zum Saugkanal (3) ein Druckluftkanal (5) zum Führen einer Druckluftströmung zugeordnet ist, wobei außenseitig am Gehäuse ein Griffbereich (14) vorgesehen zum Greifen des Saugreinigungsvorsatzes (1) mit einer Hand vorgesehen ist, wobei ein Schalter (16) zur Steuerung der Druckluftströmung vorgesehen ist und der Schalter (16) am Griffbereich (14) derart angeordnet ist, dass der Schalter (16) durch eine den Griffbereich (14) umfassende Hand mit derselben Hand betätigbar ist,
wobei der Schalter (16) einen Schwenkhebel (51) aufweist, der an seinem einem Ende schwenkbar gelagert ist und dessen anderes Ende zur Schalterbetätigung ausgebildet ist, und
wobei der Schwenkhebel (51) durch wenigstens eine Feder (17) federbelastet ist, wobei der Schwenkhebel von wenigstens einer die Druckluftströmung sperrende Sperrstellung in wenigstens eine die Druckluftströmung freigebende Freigabestellung verschwenkbar und/oder verlagerbar ist und/oder wobei der Schwenkhebel (51) von der Freigabestellung in die Sperrstellung durch Federkraft der Feder (17) verschwenkbar und/oder verlagerbar ist,
**dadurch gekennzeichnet,**
**dass** die Feder (17) zumindest mittelbar mit einem Betätigungsmittel (40) derart verbunden ist, dass das Betätigungsmittel (40) zur Rotation eines Auslösemittels (41) bei Verschwenkung und/oder Verlagerung des Schwenkhebels (51) von der Sperrstellung in die Freigabestellung und/oder von der Verschwenkung und/oder Verlagerung von der Freigabestellung in die Sperrstellung ausgebildet ist.

2. Verwendung nach Anspruch 1, **dadurch gekennzeichnet, dass** das Auslösemittel (41) als Exzenterscheibe ausgebildet ist.

3. Verwendung nach einem der vorhergehenden Ansprüche, **dadurch gekennzeichnet, dass** das Auslösemittel (41) mit einer, vorzugsweise zumindest im Wesentlichen kugelförmigen, Sperre (42) zusammenwirkt, insbesondere wobei die Sperre (42) verschieblich in einem eine Kanalöffnung (43) aufweisenden Führungskanal (44) gelagert ist und/oder wobei die in dem Führungskanal (44) anliegende Druckluft in der Sperrstellung des Schwenkhebels (51) durch die die Kanalöffnung (43) verschließende Sperre (44) gesperrt wird.

4. Verwendung nach Anspruch 3, **dadurch gekennzeichnet, dass** in der Freigabestellung des Schwenkhebels (51) die Sperre (42) durch das Auslösemittel (41) derart verschoben worden ist, dass die Druckluft durch die Kanalöffnung (43) des Führungskanals (44) in den Druckluftkanal (5) führbar ist.

5. Verwendung nach Anspruch 3 oder 4, **dadurch gekennzeichnet, dass** das Auslösemittel (41) wenigstens einen Vorsprung (45), vorzugsweise zwei Vorsprünge (45), aufweist, der derart ausgebildet ist, dass die Sperre (42) zur Öffnung der Kanalöffnung (43) des Führungskanals (44) verschiebbar ist.

6. Verwendung nach einem der vorhergehenden Ansprüche **dadurch gekennzeichnet, dass** der Schwenkhebel (51) in zwei entgegengesetzten Richtungen in jeweils eine Freigabestellung ausgehend von der Sperrstellung verschwenkbar und/oder verlagerbar ist.

7. Verwendung nach einem der vorhergehenden Ansprüche, **dadurch gekennzeichnet, dass** der Schalter (16) an dem der Saugöffnung (7) des Saugreinigungsvorsatzes (1) abgewandten Ende des Griffbereiches (14) angeordnet ist.

8. Verwendung nach einem der vorhergehenden Ansprüche, **dadurch gekennzeichnet, dass** das andere, freie Ende des Schwenkhebels (51), das insbesondere den Betätigungsabschnitt aufweist, in einen, vorzugsweise vertieften, Griffabschnittsbereich (13) des Griffbereichs (14) ragt.

9. Verwendung nach einem der vorhergehenden Ansprüche, **dadurch gekennzeichnet, dass** die Querschnittsfläche der Druckluftöffnung (6) des Druckluftkanals (5) zwischen 0,5 mm² bis 200 mm², bevorzugt zwischen 1 mm² bis 80 mm², weiter bevorzugt zwischen 10 mm² bis 30 mm², liegt und/oder dass die Querschnittsfläche der Saugöffnung (7) des Saugkanals (3) zwischen 100 mm² bis 1000 mm², bevorzugt zwischen 200 mm² bis 800 mm², weiter bevorzugt zwischen 300 mm² bis 600 mm² und insbesondere zumindest im Wesentlichen zwischen 400 mm² bis 500 mm², liegt und/oder dass das Verhältnis der Querschnittsfläche der Saugöffnung (7) zu der Querschnittsfläche der Druckluftöffnung (6) zwischen 10:1 bis 100:1, bevorzugt zwischen 12:1 bis 50:1, weiter bevorzugt zwischen 15:1 bis 25:1, weiter bevorzugt weiter zwischen 18:1 bis 20:1, liegt.

10. Verwendung nach einem der vorhergehenden Ansprüche, **dadurch gekennzeichnet, dass** im Druckluftkanal (5) während des Druckbetriebes ein Überdruck zwischen 5 bis 10 bar, bevorzugt zwischen 6 bis 8 bar, vorgesehen ist und/oder dass im Saugkanal (3) während des Saugbetriebes ein Unterdruck zwischen 0,3 bis 0,8 bar, bevorzugt zwischen 0,4 bis 0,6 bar, vorgesehen ist.

11. Verwendung nach einem der vorhergehenden Ansprüche, **dadurch gekennzeichnet, dass** das Gehäuse (4) einen den Griffbereich aufweisenden Griffabschnitt (8), einen mit dem Griffabschnitt (8) lösbar verbindbaren Gehäusestutzen (9) und ein mit dem Gehäusestutzen (9) lösbar verbindbares Endstück (10) aufweist.

12. Verwendung nach Anspruch 11, **dadurch gekennzeichnet, dass** der Saugkanal (3) und/oder der Druckluftkanal (5) zumindest abschnittsweise im oder am Griffabschnitt (8), im oder am Gehäusestutzen (9) und /oder im oder am Endstück (10) vorgesehen ist.

13. Verwendung nach Anspruch 11 oder 12, **dadurch gekennzeichnet, dass** der Druckluftkanal (5) in dem Gehäusestutzen (9) angeordnet ist und, vorzugsweise, zumindest bereichsweise von dem Saugkanal (3) in dem Gehäusestutzen (9) durch wenigstens eine Trennleiste (46) getrennt ist, insbesondere wobei der Druckluftkanal (5) an der Innenwand (47) des Gehäusestutzen (9) angegrenzt und die Trennleiste (46) mit der Innenwand (47) des Gehäusestutzen (9) verbunden ist, und/oder dass der Saugkanal (3) ein in den Gehäusestutzen (9) eingesetztes Rohrstück (11) aufweist, insbesondere wobei das Rohrstück (11) in den Griffabschnitt (8) und/oder in das Endstück (10) ragt.

14. Verwendung nach einem der Ansprüche 11 bis 13, **dadurch gekennzeichnet, dass** der insbesondere als Druckluftleitung (27) ausgebildete Druckluftkanal (5) am Gehäusestutzen (9) und/oder am Rohrstück (11) gehalten und/oder angeordnet ist, insbesondere wobei der im Gehäuse (4) vorgesehene Druckluftkanal (5) ventilfrei ausgebildet ist.

15. Verwendung einer Reinigungsvorrichtung (2) zur Innenreinigung von Kraftfahrzeugen, mit einem Saugreinigungsvorsatz (1) nach einem der vorhergehenden Ansprüche, mit einer Gebläseeinrichtung (20) zur Erzeugung eines Unterdrucks und einer Drucklufteinrichtung (21), insbesondere einem Druckluftspeicher (22) und/oder Drucklufterzeuger (23), wobei die Drucklufteinrichtung (21) dem Druckluftkanal (5) des Saugreinigungsvorsatzes (1) zugeordnet ist und wobei die Gebläseeinrichtung (20) dem Saugkanal (5) des Saugreinigungsvorsatzes (1) zugeordnet ist.

## Claims

1. Use of a suction cleaning attachment (1) of a cleaning device (2) for cleaning the interior of motor vehicles by means of a suction air flow, with a housing (4) having a suction channel (3) for guiding the suction airflow,
wherein, in addition to the suction channel (3), a compressed air channel (5) for guiding a compressed air flow is provided in the housing (4) and/or wherein, in addition to the suction channel (3), a compressed air channel (5) for guiding a compressed air flow is associated with the housing (4), wherein a handle area (14) is provided on the outside of the housing for gripping the suction cleaning attachment (1) with one hand, wherein a switch (16) is provided for controlling the compressed air flow and the switch (16) is arranged at the handle area (14) in such a way that the switch (16) can be actuated by a hand encompassing the handle area (14) with the same hand,
wherein the switch (16) has a swivel lever (51) which is pivotably mounted at its one end and whose other end is designed for switch actuation, and
wherein the swivel lever (51) is spring-loaded by at least one spring (17),
wherein the swivel lever (51) can be pivotable and/or displaceable from at least one blocking position blocking the compressed air flow into at least one release position releasing the compressed air flow and/or wherein the swivel lever (51) can be pivoted and/or displaced from the release position into the blocking position by the spring force of the spring (17)
**characterized in that**
the spring (17) is at least indirectly connected to an actuating means (40) in such a way that the actuating means (40) is designed to rotate a release means (41) upon pivoting and/or displacement of the swivel lever (51) from the locked position into the release position and/or from pivoting and/or displacement from the release position into the locked position.

2. Use according to claim 1, **characterized in that** the release means (41) is designed as an eccentric disc.

3. Use according to one of the preceding claims, **characterized in that** the release means (41) cooperates with a, preferably at least substantially spherical, lock (42), in particular wherein the lock (42) is displaceably mounted in a guide channel (44) having a channel opening (43) and/or wherein the compressed air present in the guide channel (44) is blocked in the blocking position of the swivel lever (51) by the lock (42) closing the channel opening (43).

4. Use according to claim 3, **characterized in that**, in the release position of the swivel lever (51), the lock (42) has been displaced by the release means (41) in such a way that the compressed air can be guided through the channel opening (43) of the guide channel (44) into the compressed air channel (5).

5. Use according to claim 3 or 4, **characterized in that** the release means (41) has at least one protrusion (45), preferably two protrusions (45), which is designed in such a way that the lock (42) is displaceable towards the opening of the channel opening (43) of the guide channel (44).

6. Use according to one of the preceding claims, **characterized in that** the swivel lever (51) can be pivoted and/or displaced in two opposite directions into a respective release position starting from the locked position.

7. Use according to one of the preceding claims, **characterized in that** the switch (16) is arranged at the end of the handle area (14) facing away from the suction opening (7) of the suction cleaning attachment (1).

8. Use according to one of the preceding claims, **characterized in that** the other, free end of the swivel lever (51), which in particular has the actuating section, projects into a, preferably recessed, handle section area (13) of the handle area (14).

9. Use according to one of the preceding claims, **characterized in that** the cross-sectional area of the compressed air opening (6) of the compressed-air channel (5) is between 0.5 mm² to 200 mm², preferably between 1 mm² to 80 mm², more preferably between 10 mm² to 30 mm², and/or **in that** the cross-sectional area of the suction opening (7) of the suction channel (3) is between 100 mm² to 1000 mm², preferably between 200 mm² to 800 mm², more preferably between 300 mm² to 600 mm² and in particular at least substantially between 400 mm² to 500 mm², and/or that the ratio of the cross-sectional area of the suction opening (7) to the cross-sectional area of the compressed air opening (6) is between 10:1 to 100:1, preferably between 12:1 to 50:1, more preferably between 15:1 to 25:1, more preferably further between 18:1 to 20:1.

10. Use according to one of the preceding claims, **characterized in that** an overpressure between 5 to 10 bar, preferably between 6 to 8 bar, is provided in the compressed air channel (5) during the pressure operation and/or that a negative pressure between 0.3 to 0.8 bar, preferably between 0.4 to 0.6 bar, is provided in the suction channel (3) during the suction operation.

11. Use according to one of the preceding claims, **characterized in that** the housing (4) has a handle section (8) comprising the handle area, a housing nozzle (9) that can be detachably connected to the handle section (8), and an end piece (10) that can be detachably connected to the housing nozzle (9).

12. Use according claim 11, **characterized in that** the suction channel (3) and/or the compressed air channel (5) is provided at least in sections in or on the handle section (8), in or on the housing nozzle (9) and/or in or on the end piece (10).

13. Use according to claim 11 or 12, **characterized in that** the compressed air channel (5) is arranged in the housing connecting piece (9) and, preferably, is separated at least in regions from the suction channel (3) in the housing connecting piece (9) by at least one separator bar (46), in particular wherein the compressed air channel (5) is adjacent to the inner wall (47) of the housing nozzle (9) and the separator bar (46) is connected to the inner wall (47) of the housing nozzle (9), and/or **in that** the suction channel (3) has a pipe section (11) inserted into the housing nozzle (9), in particular wherein the pipe section (11) projects into the handle section (8) and/or into the end piece (10).

14. Use according to claims 11 to 13, **characterized in that** the compressed-air channel (5), which is designed in particular as a compressed-air line (27), is held and/or arranged on the housing nozzle (9) and/or on the pipe section (11), in particular wherein the compressed air channel (5) provided in the housing (4) is designed to be valve-free.

15. Use of a cleaning device (2) for cleaning the interior of motor vehicles, having a suction cleaning attachment (1) according to one of the preceding claims, having a fan device (20) for generating a negative pressure and a compressed air device (21), in particular a compressed air reservoir (22) and/or compressed air generator (23), the compressed air device (21) being assigned to the compressed air channel (5) of the suction cleaning attachment (1), and the fan device (20) being assigned to the suction channel (5) of the suction cleaning attachment (1).

## Revendications

1. Utilisation d'une tête de nettoyage par aspiration (1) d'un dispositif de nettoyage (2) pour le nettoyage intérieur de véhicules automobiles au moyen d'un flux d'air aspiré, avec un boîtier comprenant un canal d'aspiration (3) pour le guidage du flux d'air aspiré (4),
un canal d'air comprimé (5) étant prévu dans le boîtier (4) en plus du canal d'aspiration (3) pour guider un flux d'air comprimé et/ou un canal d'air comprimé (5) étant associé au boîtier (4) en plus du canal d'aspiration (3) pour guider un flux d'air comprimé, une zone de préhension (14) étant prévue sur le côté extérieur du boîtier pour saisir le tête de nettoyage par aspiration (1) avec une main, un interrupteur (16) étant prévu pour commander le flux d'air comprimé et l'interrupteur (16) étant disposé sur la zone de préhension (14) de telle sorte que l'interrupteur (16) puisse être actionné par une main entourant la zone de préhension (14) avec la même main,
l'interrupteur (16) présentant un levier pivotant (51) qui est logé de manière pivotante à une de ses extrémités et dont l'autre extrémité est conçue pour l'actionnement du interrupteur, et
le levier pivotant (51) étant sollicité par ressort par au moins un ressort (17), le levier pivotant pouvant pivoter et/ou être déplacé d'au moins une position de blocage bloquant le flux d'air comprimé dans au moins une position de libération libérant le flux d'air comprimé et/ou le levier pivotant (51) pouvant pivoter et/ou être déplacé de la position de libération dans la position de blocage par la force du ressort (17),
**caractérisée en ce que**
le ressort (17) est relié au moins indirectement à un moyen d'actionnement (40) de telle sorte que le moyen d'actionnement (40) est conçu pour la rotation d'un moyen de déclenchement (41) lors du pivotement et/ou du déplacement du levier pivotant (51) de la position de blocage à la position de libération et/ou du pivotement et/ou du déplacement de la position de libération à la position de blocage.

2. Utilisation selon la revendication 1, **caractérisée en ce que** le moyen de déclenchement (41) est conçu comme un disque excentrique.

3. Utilisation selon l'une des revendications précédentes, **caractérisée en ce que** le moyen de déclenchement (41) coopère avec un dispositif de blocage (42), de préférence au moins sensiblement sphérique, en particulier le dispositif de blocage (42) étant monté coulissant dans un canal de guidage (44) présentant une ouverture de canal (43) et/ou l'air comprimé présent dans le canal de guidage (44) étant bloqué dans la position de blocage du levier pivotant (51) par le dispositif de blocage (44) fermant l'ouverture de canal (43).

4. Utilisation selon la revendication 3, **caractérisée en ce que** dans la position de libération du levier pivotant (51), le dispositif de blocage (42) a été déplacé par le moyen de déclenchement (41) de telle sorte que l'air comprimé peut être guidé à travers l'ouverture de canal (43) du canal de guidage (44) dans le canal d'air comprimé (5).

5. Utilisation selon la revendication 3 ou 4, **caractérisée en ce que** le moyen de déclenchement (41) comporte au moins une saillie (45), de préférence deux saillies (45), qui est conçue de telle sorte que le dispositif de blocage (42) peut être déplacé vers l'ouverture du canal (43) du canal de guidage (44).

6. Utilisation selon l'une des revendications précédentes, **caractérisée en ce que** le levier pivotant (51) peut pivoter et/ou être déplacé dans deux directions opposées vers une position de libération respective à partir de la position de blocage.

7. Utilisation selon l'une des revendications précédentes, **caractérisée en ce que** l'interrupteur (16) est disposé à l'extrémité de la zone de préhension (14) opposée à l'ouverture d'aspiration (7) de la tête de nettoyage par aspiration (1).

8. Utilisation selon l'une des revendications précédentes, **caractérisée en ce que** l'autre extrémité libre du levier pivotant (51), qui présente en particulier la section d'actionnement, fait saillie dans une zone de section de préhension (13), de préférence en creux, de la zone de préhension (14).

9. Utilisation selon l'une des revendications précédentes, **caractérisée en ce que** la surface de la section de l'ouverture d'air comprimé (6) du canal d'air comprimé (5) est comprise entre 0,5 mm² et 200 mm², de préférence entre 1 mm² et 80 mm², plus préférentiellement entre 10 mm² et 30 mm², et/ou **en ce que** la surface de la section de l'ouverture d'aspiration (7) du canal d'aspiration (3) est comprise entre 100 mm² et 1000 mm², de préférence entre 200 mm² et 800 mm², de préférence encore entre 300 mm² et 600 mm² et en particulier au moins essentiellement entre 400 mm² et 500 mm², et/ou que le rapport entre la surface de la section de l'ouverture d'aspiration (7) et la surface de la section de l'ouverture d'air comprimé (6) est compris entre 10:1 à 100:1, de préférence entre 12:1 et 50:1, de préférence encore entre 15:1 et 25:1, de préférence encore entre 18:1 et 20:1.

10. Utilisation selon l'une des revendications précédentes, **caractérisée en ce qu'**une surpression comprise entre 5 et 10 bar, de préférence entre 6 et 8 bar, est prévue dans le canal d'air comprimé (5) pendant le fonctionnement en pression et/ou **en ce qu'**une dépression comprise entre 0,3 et 0,8 bar, de préférence entre 0,4 et 0,6 bar, est prévue dans le canal d'aspiration (3) pendant le fonctionnement en aspiration.

11. Utilisation selon l'une des revendications précédentes, **caractérisée en ce que** le boîtier (4) présente une section de préhension (8) présentant la zone de préhension, un embout de boîtier (9) pouvant être relié de manière amovible à la section de préhension (8) et une pièce d'extrémité (10) pouvant être reliée de manière amovible à l'embout de boîtier (9).

12. Utilisation selon la revendication 11, **caractérisée en ce que** le canal d'aspiration (3) et/ou le canal d'air comprimé (5) est prévu au moins par sections dans ou sur la section de préhension (8), dans ou sur l'embout de boîtier (9) et/ou dans ou sur la pièce d'extrémité (10).

13. Utilisation selon la revendication 11 ou 12, **caractérisée en ce que** le canal d'air comprimé (5) est disposé dans l'embout de boîtier (9) et, de préférence, est séparé au moins par zones du canal d'aspiration (3) dans l'embout de boîtier (9) par au moins une barre de séparation (46), en particulier le canal d'air comprimé (5) étant délimité sur la paroi intérieure (47) du embout de boîtier (9) et la barre de séparation (46) étant reliée à la paroi intérieure (47) du embout de boîtier (9), et/ou **en ce que** le canal d'aspiration (3) présente une pièce tubulaire (11) insérée dans l'embout de boîtier (9), en particulier la pièce tubulaire (11) pénétrant dans la section de préhension (8) et/ou dans la pièce d'extrémité (10).

14. Utilisation selon l'une des revendications 11 à 13, **caractérisée en ce que** le canal d'air comprimé (5), réalisé en particulier sous forme de conduite d'air comprimé (27), est maintenu et/ou disposé sur l'embout de boîtier (9) et/ou sur la pièce tubulaire (11), en particulier le canal d'air comprimé (5) prévu dans le boîtier (4) étant réalisé sans soupape.

15. Utilisation d'un dispositif de nettoyage (2) pour le nettoyage intérieur de véhicules automobiles, avec une tête de nettoyage par aspiration (1) selon l'une des revendications précédentes, avec un dispositif de soufflerie (20) pour générer une dépression et un dispositif à air comprimé (21), en particulier un accumulateur d'air comprimé (22) et/ou un générateur d'air comprimé (23), le dispositif d'air comprimé (21) étant associé au canal d'air comprimé (5) de la tête de nettoyage par aspiration (1) et le dispositif de soufflerie (20) étant associé au canal d'aspiration (5) de la tête de nettoyage par aspiration (1).
